# FASCICULE DE BREVET EUROPEEN

(11) **EP 2 633 215 B1**
(45) Date de publication et mention de la délivrance du brevet: **30.08.2017**
(21) Numéro de dépôt: 11773768.4
(22) Date de dépôt: 26.09.2011
(51) Int. Cl.: B63B 35/03, B63B 35/04, F16L 1/12, F16L 1/16, F16L 1/20

(54) **DISPOSITIF DE STOCKAGE ET DE MANUTENTION MODULAIRE D'UNE PLURALITÉ DE CONDUITES SOUPLES**
MODULARE VORRICHTUNG ZUR SPEICHERUNG UND HANDHABUNG EINER VIELZAHL VON BIEGSAMEN ROHREN
MODULAR DEVICE FOR THE STORAGE AND HANDLING OF A PLURALITY OF FLEXIBLE PIPES

(30) Priorité: 19.11.2010 FR 1059509; 25.10.2010 FR 1058734
(43) Date de publication de la demande: 04.09.2013
(73) Titulaire: Saipem SA, 78180 Montigny-le-Bretonneux (FR)
(72) Inventeur: PIONETTI, François-Régis, F-50450 La Baleine (FR); ROCHER, Xavier, F-78400 Chatou (FR)
(74) Mandataire: Domange, Maxime
(86) Numéro de dépôt international: PCT/FR2011/052225
(87) Numéro de publication internationale: WO 2012/056133

(56) Documents cités:
- WO-A2-2004/068012

## Description

La présente invention concerne un équipement de chargement, de transport et de pose de conduites souples, telles des conduites flexibles ou des ombilicaux de commande comportant des câbles électriques, disposés à bord de support flottants en vue d'être installés en mer.

Le secteur technique de l'invention est plus particulièrement le domaine l'installation de conduites reposant sur le fond de la mer notamment comprenant des colonnes montantes incluant des conduites flexibles pour l'extraction sous-marine de pétrole, de gaz ou autre matériau soluble ou fusible ou d'une suspension de matière minérale à partir de tête de puits immergé jusqu'à un support flottant, pour le développement de champs de production installés en pleine mer au large des côtes. L'application principale et immédiate de l'invention est dans le domaine de la production pétrolière en mer.

Les conduites flexibles utilisées pour servir de lignes de production ou de services destinées à l'acheminement des hydrocarbures liquides ou respectivement gazeux présentent une résistance mécanique élevée en particulier à la pression interne, à la traction et à l'écrasement, et sont habituellement posées au moyen de treuils ou de dispositifs de traction tels que des tensionneurs à chenilles comportant des chenilles munies de patins qui enserrent la conduite et se déplacent en translation de manière continue pour l'entraîner conjointement, ou encore en combinant ces deux moyens.

Les efforts de traction appliqués par ces dispositifs tensionneurs à chenilles sur une conduite flexible peuvent être considérables lors de la pose à grande profondeur, et les forces de compression exercées par les patins sur la conduite doivent être suffisamment élevées pour éviter tout glissement relatif entre les patins et la conduite.

Un ombilical de commande comporte une ou plusieurs conduites hydrauliques et/ou des câbles électriques pour la transmission d'énergie et/ou d'informations.

Les conduites connues sous la dénomination « conduite flexible » sont bien connues de l'homme de l'art et ont été décrites dans les documents normatifs publiés par l'American Petroleum Institute (API), plus particulièrement sous les références API 17J et API RP 17 B. De tels flexibles sont notamment fabriqués et commercialisés par la Société COFLEXIP France.

Ces conduites flexibles comportent en général des couches d'étanchéité internes en matériaux thermoplastiques associées à des couches résistantes à la pression interne à la conduite, en général en acier ou en matériaux composites. De telles conduites flexibles sont constituées plus particulièrement d'assemblage de couches de matériaux thermoplastiques tubulaires et de couches résistantes en acier ou matériaux composites réalisés sous forme de bandes spiralées, jointives à l'intérieur de la conduite thermoplastique pour résister à la pression interne d'éclatement et complétés par des armatures externes au-dessus de la couche tubulaire thermoplastique également sous forme de bandes spiralées jointives, mais avec un pas plus long, c'est-à-dire un angle d'inclinaison de l'hélice inférieur, notamment de 15° à 55°.

Dans la présente description, on entend plus généralement par « conduite souple sous-marine », un câble, un ombilical ou une conduite capable d'accepter des déformations importantes sans engendrer des efforts de rappel significatifs, notamment une conduite flexible.

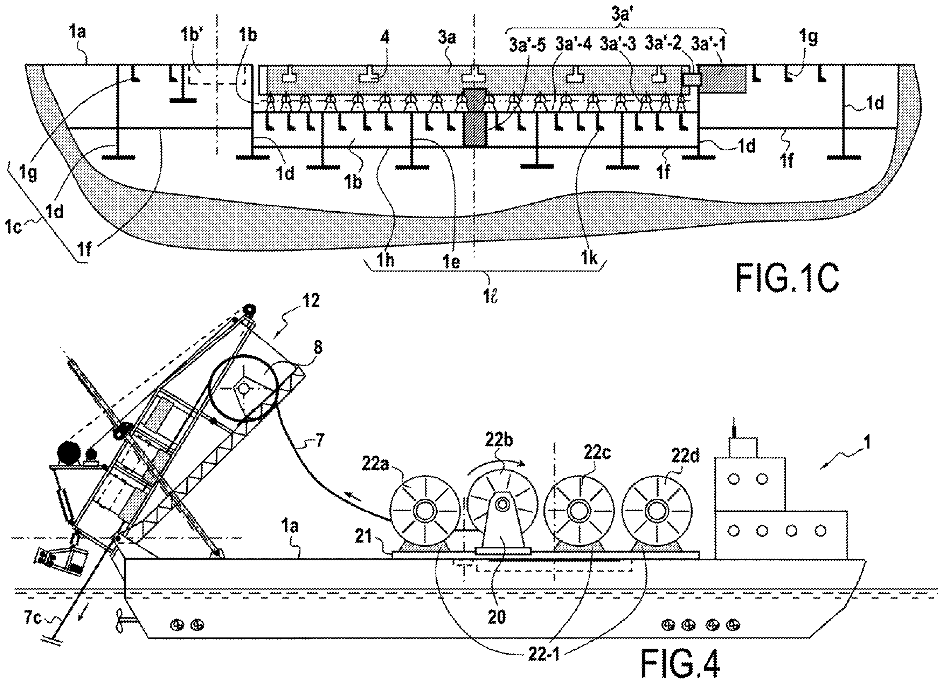

Dans la technique antérieure, les navires de pose en mer de conduites souples sont équipés de dispositifs de stockage et de manutention desdites conduites tel que décrit ci-après en référence à la figure 4. Le plus classiquement, une série de treuils ou bobines à axe horizontal sur lequel sont enroulés des portions de conduite sont disposés côte à côte dans la direction longitudinale du navire. Les différentes portions de conduite sont donc enroulées sur une pluralité de treuils équipés d'un fût horizontal entre deux flasques latéraux verticaux. Dans ce type de réalisation de la technique antérieure, le fût horizontal doit présenter une rigidité en flexion du fait que le poids de la conduite enroulée est entièrement repris par le fût.

D'autre part, le poids de la conduite et du treuil incluant ces flasques latéraux verticaux est entièrement transmis à la motorisation de la bobine. Il en résulte que les treuils ont nécessairement une taille de flasque et une capacité de longueur de conduite enroulable limitée, ceci d'autant plus que le diamètre de la conduite est plus important.

Dans le cas de conduites flexibles de grand diamètre, ce stockage conventionnel sur treuils selon la figure 4 est souvent impossible, car le rayon de courbure minimal de ladite conduite flexible est très grand, notamment jusqu'à 5m voire plus, ce qui nécessiterait des bobines de très grande taille que l'on ne saurait alors plus manipuler.

Ainsi, en pratique, le diamètre des flasques ne dépasse pas 5 à 10 m pour un poids de bobine de 400 à 500 tonnes correspondant à des longueurs de portions de conduites inférieures à 10 km, en pratique de 1 à 10 km pour des diamètres de conduite de 50 à 300 mm, c'est pourquoi, il est nécessaire pour poser des conduites de grande longueur et/ou de grand diamètre de mettre en oeuvre un grand nombre de treuils ainsi disposés côte à côte. Enfin, les connections des différentes portions de conduites entre elles pour constituer la conduite complète de liaison fond-surface, représentent des opérations de manutention relativement délicates et longues à réaliser requérant des immobilisations du navire de pose sur une grande durée et donc coûteuse.

On connaît également des dispositifs de stockage et de manutention de conduites souples impliquant la mise en oeuvre de dispositifs d'enroulement de type « treuil » avec un fût vertical sur lequel est enroulé la conduite, ce type de dispositif étant soit posé par-dessus le pont du navire, soit installé à l'intérieur du navire, en général à fond de cale. Toutefois, dans ce cas, du fait que le flasque inférieur du treuil est disposé horizontalement par-dessus le pont du navire, ce flasque reçoit toute la charge et doit être supporté par un dispositif de support et de rotation qui doit présenter une rigidité extrême pour résister à lui seul aux efforts de compression, mais aussi de flexion et/ou torsion, car le flasque constituant un plateau tournant doit être maintenu bien plan pour que la rotation selon l'axe vertical du treuil puisse être opérée de manière stable et précise ; mais aussi pour que ledit treuil puisse être déplacé après utilisation pour libérer le pont du navire pour d'autres opérations.

L'installation de tels équipements est délicate car elle nécessite des moyens de levage puissants, car la structure porteuse du plateau tournant ainsi que ledit plateau pèsent de 250 tonnes à 750 tonnes, voire plus dans les cas extrêmes. Ainsi l'installation ou la démobilisation de tels équipements ne peut se faire qu'en zone abritée, en général dans un port, et immobilise le navire pendant 4-5 jours, voire plusieurs semaines.

Dans WO 2004/068012, on décrit des dispositifs de stockage de conduites par enroulement de conduites comprenant un plateau circulaire tournant monté par-dessus une surface inférieure de support située au-dessus du pont du navire sur lequel ledit dispositif de stockage de conduites est embarqué.

Dans WO 2004/068012, le dispositif de stockage de conduites fonctionne par enroulement en mode mixte carrousel/panier tournant, décrit figure 4B, dans lequel on enroule en « mode panier » (au sens de la définition donnée au paragraphe (e) ci-après d'un dispositif de stockage selon l'invention) un ombilical 10422 de petit diamètre contre le fût central du dispositif de stockage, tandis qu'une conduite 1044 de plus grand diamètre est enroulée en « mode carrousel » (au sens de la définition donnée au paragraphe (b) ci-après de la définition du dispositif de stockage modulaire de la présente invention) à l'extérieur des poteaux ou moyens de retenu du dispositif de stockage.

Ainsi, compte tenu du fait que la conduite 10422 est enroulée en mode panier, le fût central n'est pas recouvert d'un flasque de diamètre supérieur à celui du fût. Mais, l'ouverture supérieure entre le fût central et les moyens périphériques 10406 de retenu de la conduite 10422, est libre.

En revanche, un flasque supérieur 10408 est ajouté au sommet des éléments de support d'enroulement 10406 à l'extérieur desquels et contre lesquels est enroulé la conduite 10044 en mode carrousel.

Dans le document WO 2004/068012, par nécessité, l'ombilical ou la conduite enroulé en mode panier autour du fût central doit autoriser un plus petit rayon de courbure minimale et la conduite doit donc présenter un relativement plus petit diamètre.

Le mode de réalisation du dispositif de stockage mixte selon WO 2004/068012 présente l'inconvénient de nécessiter un fût central de plus grand diamètre lorsque les conduites stockées en mode panier sont de diamètre important, ce qui rend inutilisable la zone de stockage située entre ledit fût et l'axe du panier, la capacité globale de stockage s'en trouvant ainsi radicalement réduite par rapport au mode de stockage selon la présente invention. En outre, il est plus difficile de mettre en oeuvre un enroulement en mode panier avec des conduites ou ombilicaux de plus petits diamètres car l'enroulement ne se fait pas sous tension et demande un contrôle plus précis et donc plus difficile à réaliser pour la formation des spires concentriques reposant sur un même plan, et ce d'autant plus que le diamètre de la conduite et le diamètre des spires sont plus petits.

EP 1 118 572 confirme l'analyse développée ci-dessus quant à la difficulté d'enrouler en mode panier une couche multi-spires comportant une pluralité de spires concentriques reposant sur un même plan, pour une conduite de petit diamètre, comme cela est requis en mode panier.

Dans WO 2004/068012, EP 1 118 572 et WO 2009/129223 qui décrivent des dispositifs de stockage de conduites par enroulement sur un navire de pose en mer comportant un plateau tournant ou flasque inférieur, ledit plateau tournant ou flasque inférieur du dispositif est situé par-dessus le pont du navire.

Le but de la présente invention est de fournir un nouveau dispositif amélioré de stockage et de maintien de conduite souple sur le pont d'un navire de transport et pose en mer de telles conduites.

Plus particulièrement, le but de l'invention est de fournir un dispositif de stockage et de manutention de conduites souples à bord de navires de pose qui permette de réaliser les opérations de pose en mer de dites conduites souples plus longues et ce plus facilement et plus rapidement ; et plus particulièrement encore qui permette de libérer le pont du navire plus facilement et plus rapidement une fois les opérations de pose de la conduite achevées et de réinstaller le dispositif en tant que de besoin pour une nouvelle pose de conduite, le plus facilement et le plus rapidement possible et ce avec des moyens de manutention relativement réduits, autorisant ainsi le cas échéant des manutentions effectuées sur site.

Pour ce faire, la présente invention fournit un dispositif de stockage et manutention modulaire de première(s) à (n + 2)^{ième(s)} conduites souples par enroulement et déroulement desdites conduites souples, comprenant :
a) un dit plateau circulaire tournant et un dispositif de rotation motorisée du plateau tournant autour de son axe central vertical Z₁Z₁', ledit plateau tournant étant disposé sur un plan et présentant des éléments d'accrochage auxquels sont accrochés de manière réversible des accessoires sur sa face supérieure, lesdits accessoires comprenant :
   (i) un premier support d'enroulement d'au moins une première conduite souple, et
   (ii) des premiers à (n+2)^{ièmes} poteaux intermédiaires formant des deuxièmes à respectivement (n+2)^{ièmes} supports d'enroulement de deuxième(s) à respectivement (n+2)^{ième(s)} conduite(s) souple(s), n étant un nombre entier de 0 à 10, de préférence de 1 à 5, et
   (iii) des poteaux périphériques de retenue, lesdits accessoires s'étendant dans une direction perpendiculaire ZZ' audit plan et au dessus dudit plateau tournant, lesdits éléments d'accrochage étant de préférence répartis régulièrement sur la face supérieure dudit plateau tournant, de préférence encore circulairement et symétriquement répartis par rapport à l'axe central vertical Z₁Z₁' de rotation dudit plateau tournant de manière à pouvoir y accrocher lesdits accessoires à différentes positions permettant ainsi des enroulements de diamètres variables selon la position desdits accessoires à la surface du plateau tournant, et
b) un dit premier support d'enroulement d'une première conduite à paroi continue en forme de fût central cylindrique ou cylindro-tronconique disposé coaxialement Z₁Z₁' audit plateau tournant, de diamètre inférieur à celui du plateau tournant, ledit fût central étant surmonté d'un flasque circulaire supérieur à son sommet, et de préférence entouré en outre d'au moins un flasque circulaire intermédiaire, le ou lesdits flasque(s) présentant un diamètre supérieur à celui dudit fût central et inférieur à celui dudit plateau tournant, chaque dite première conduite souple étant enroulée en mode dit carrousel en au moins une couche, de préférence plusieurs couches coaxiales, de préférence encore k= 2 à 100 couches, chaque couche comprenant plusieurs spires jointives superposées hélicoïdalement à une même distance radiale dudit axe ZZ', de préférence comprenant I=2 à 100 spires, de préférence encore 5 à 10 spires, telle que les spires d'une même couche soient superposées par enroulement hélicoïdale depuis la spire inférieure appliquée contre ledit plateau tournant ou un dit flasque intermédiaire jusqu'à la spire supérieure venant buter en sous face dudit flasque supérieur ou d'un dit flasque intermédiaire, les différentes couches coaxiales étant juxtaposées de diamètres croissants depuis la première couche appliquée contre ledit fût central jusqu'à la dernière couche la plus éloignée radialement dudit axe central Z₁Z₁', et
c) une série d'une pluralité de dits premiers poteaux intermédiaires dénommés poteaux internes formant des deuxièmes supports d'enroulement d'une deuxième conduite souple, lesdits premiers poteaux intermédiaires étant disposés circulairement et de préférence symétriquement par rapport à l'axe central de rotation Z₁Z_{1'} dudit plateau à une même distance radiale constante dudit axe Z₁Z₁' supérieure à celle de la dernière couche de ladite première conduite, et de préférence encore répartis régulièrement le long de leur dite ligne circulaire de positionnement sur ledit plateau tournant, lesdits premiers poteaux intermédiaires étant de préférence de même hauteur et solidarisés entre eux à leurs sommets par fixation sur la périphérie dudit flasque supérieure, et
d) n séries d'une pluralité de deuxièmes à (n+1)^{ièmes} poteaux intermédiaires formant des troisièmes à respectivement (n+2)^{ièmes} supports d'enroulement de troisième(s) à respectivement (n+2)^{ième(s)} conduite(s) souple(s) et formant des deuxièmes à respectivement (n+1)^{ièmes} poteaux de retenue de deuxième(s) à respectivement (n+1)^{ième(s)} conduite(s) souple(s), lesdits deuxièmes à respectivement (n+1)^{ièmes} poteaux intermédiaires étant disposés circulairement et de préférence symétriquement par à l'axe central de rotation Z₁Z₁' dudit plateau à une même distance radiale constante dudit axe Z₁Z₁' supérieure à celle des premiers à respectivement nièmes poteaux intermédiaires, et de préférence encore répartis régulièrement le long de leur dite ligne circulaire de positionnement sur ledit plateau tournant, les différents poteaux d'une même série de deuxièmes à (n+1)^{ièmes} poteaux intermédiaires étant de préférence de même hauteur et réunis successivement entre eux à leurs sommets par une virole circulaire, et
e) chaque dite deuxième à respectivement (n+2)^{ième} conduite souple étant enroulée en mode dit du type panier tournant en au moins une couche, de préférence plusieurs couches superposées de spires jointives reposant sur un même plan, de préférence m=2 à 100 couches, de préférence encore m=5 à 20 couches, chaque couche comprenant au moins une spire de préférence plusieurs spires, de préférence encore p= 1 à 50 spires, de préférence p=5 à 20 spires, lesdites couches étant superposées depuis la première couche reposant sur ledit plateau tournant jusqu'à la dernière couche en dessous du sommet des supports d'enroulement de ladite conduite, les spires d'une même couche étant coaxiales et successivement juxtaposées sur un même plan et de diamètres croissants depuis une spire dite interne appliquée contre les deuxièmes à respectivement (n+1)^{ièmes} poteaux intermédiaires jusqu'à une spire dite externe venant buter contre des troisièmes à respectivement (n+i)^{ièmes} poteaux intermédiaires pour des deuxième à (n+1)^{ième} conduites souples, et
f) desdits poteaux périphériques de retenue disposés circulairement et de préférence symétriquement par à l'axe central de rotation Z₁Z₁' dudit plateau à une même distance radiale constante dudit axe Z₁Z₁' supérieure à celle des (n+2)^{ièmes} poteaux intermédiaires, et, de préférence encore répartis régulièrement le long de leur dite ligne circulaire de positionnement à la périphérie dudit plateau tournant, les différents poteaux de retenue périphérique étant de préférence de même hauteur et réunis successivement entre eux à leurs sommets par une virole circulaire, une (n+2)^{ième} conduite souple pouvant ainsi venir buter sur lesdits poteaux périphériques de retenue.
On comprend que :
- les spires des différentes couches de la première conduite présentent le même diamètre dans le cas d'un fût central cylindrique, et les couches coaxiales de la première conduite vont depuis une première couche appliquée contre ledit fût central jusqu'à la dernière couche, les spires des couches impaires étant enroulées hélicoïdalement en montant depuis la première spire inférieure reposant sur le plateau tournant contre et à côté de la dernière spire inférieure de la couche précédente, jusqu'à la dernière spire supérieure arrivant en sous face du flasque supérieur contre et à côté de la première spire supérieure de la couche précédente, les spires d'une couche paire étant enroulées depuis la première spire supérieure réalisée par enroulement jointif coaxial sensiblement sur un même plan que la dernière spire supérieure de la couche précédente en sous face dudit flasque supérieur, puis par enroulement descendant jusqu'à la dernière spire inférieure reposant sur le plateau tournant contre et à côté de la première spire inférieure de la couche précédente ;
- les spires d'une même couche des deuxième à (n + 2)^{ième} conduites souples présentent des diamètres croissants pour les couches paires depuis la première spire dénommée « spire interne », appliquée contre leurs supports d'enroulement, jusqu'à la dernière spire, dénommée « spire externe », la plus éloignée radialement, mais ne venant pas nécessairement buter contre les supports d'enroulement de la conduite suivante, et, pour les couches impaires, des diamètres décroissants, à savoir enroulés en sens retour, depuis la première spire dénommée « spire externe », la plus éloignée radialement, réalisée par enroulement hélicoïdal superposé à la dernière spire externe de la couche paire précédente, jusqu'à la dernière spire interne superposée à la première spire de la couche précédente ;
- lorsque n=0, il n'y a que des première(s) et deuxième(s) conduites souples, et aucun (0) deuxième poteau intermédiaire ;
- lorsqu'il y a une pluralité d'un nombre q de ièmes conduites avec i=1 à (n+2), cette pluralité de ièmes conduites n'excède pas q=3, de préférence q=2 conduites ;
- lesdits poteaux internes sont disposés à une même distance radiale dudit axe central de rotation Z₁Z₁', de préférence identique au rayon desdits flasques ;
- chaque dite première conduite enroulée en mode carrousel est disposée entre deux flasques entourant ledit fût à des hauteurs différentes ou entre le plateau tournant et un premier flasque intermédiaire. Les différentes premières conduites peuvent être enroulées ou déroulées dans un ordre quelconque ;
- chaque dite première couche n'interfère pas avec lesdits premiers poteaux intermédiaires, c'est-à-dire ne vient pas buter contre lesdits premiers poteaux intermédiaires, car ces derniers sont installés après la fin de l'enroulement en mode carrousel, et
- chaque compartiment délimité par deux séries successives de ièmes et respectivement (i+1)^{ièmes} supports d'enroulement ou (i+1)^{ièmes} à respectivement (i+2)^{ièmes} poteaux intermédiaires, aussi appelés « panier », peut contenir une pluralité de ièmes conduites flexibles enroulées les unes après et par-dessus les autres. Dans ce cas, lesdites ièmes conduites flexibles superposées doivent être déroulées dans un ordre inversé à celui de leur ordre d'enroulement, c'est-à-dire que l'on commence par dérouler la conduite supérieure.

La configuration du dispositif de stockage de conduites à enroulement en mode mixte carrousel/panier tournant selon la présente invention est inversée par rapport au dispositif décrit dans WO 2004/068012.

Tel que défini selon la présente invention, ladite première conduite enroulée en mode carrousel est enroulée contre le fût central recouvert d'un flasque supérieur et les conduites de relativement plus grands diamètres, donc de plus grand rayon de courbure minimale, peuvent être enroulées en mode panier entre des i^{ièmes} et des (i+1)^{ièmes} poteaux intermédiaires dont l'espace entre les sommets des poteaux est libre, c'est-à-dire non-obstrué par un flasque supérieure.

Ainsi, selon la présente invention, du fait que les conduites enroulées en mode panier sont les conduites autorisant le plus grand rayon minimal de courbure, c'est-à-dire les conduites de plus grands diamètres et enroulées selon des spires de plus grands diamètres que celles enroulées en mode carrousel sur le fût central, il est plus facile de réaliser cet enroulement en mode panier selon la présente invention que dans WO 2004/068012.

De même, le diamètre du fût central peut être avantageusement minimisé pour correspondre exactement au rayon minimal de courbure de la conduite stockée en mode carrousel, ce qui augmente d'autant la capacité de stockage du dispositif selon l'invention. Et, du fait que les éléments sont modulaires et démontables, on pourra disposer avantageusement de plusieurs fûts de diamètres différents.

La solution avantageuse selon la présente invention nécessitait de fournir un dispositif modulaire, à savoir que les différents dits poteaux intermédiaires devaient nécessairement être accrochés de manière réversible car selon la présente invention ladite première conduite enroulée en mode carrousel contre le fût central ne peut pas être déroulée si lesdites deuxième à respectivement (n+2)^{ièmes} conduites souples n'ont pas d'abord été déroulées et que lesdits premier à respectivement (n+2)^{ièmes} poteaux intermédiaires n'ont pas été décrochés dudit plateau tournant pour permettre le déroulement des conduites enroulées en mode carrousel.

En effet, le déroulement des conduites enroulées en mode carrousel requiert que lesdites premières portions de conduite déroulées soient tensionnées sensiblement horizontalement, comme indiqué au paragraphe ii ci-après. Il faut donc bien retirer les éléments de support d'enroulement ou poteaux intermédiaires qui pourraient faire obstacle au déroulement de la première conduite en mode carrousel avec la première portion de conduite tensionnée horizontalement.

Dans WO 2004/068012, les différents éléments de support d'enroulement ne sont pas ou ne peuvent pas être accrochés de manière réversible sur le plateau tournant. C'est pour cette raison que dans WO 2004/068012 la conduite enroulée en mode carrousel est située en périphérie alors qu'il serait préférable, comme exposé ci-dessus, de réserver cet enroulement en mode carrousel pour les conduites de plus petits diamètres par enroulement contre un dit fût central de relativement petit diamètre, comme autorisé selon la présente invention tel que défini ci-dessus.

Plus particulièrement encore, le dispositif de stockage et manutention modulaire de conduites souples, comprend en outre :
- un dispositif de trancanage comprenant au moins un élément de support d'au moins un dispositif de guidage et maintien de conduite souple apte à permettre le déplacement vertical et/ou horizontal d'une dite première portion de conduite souple s'étendant entre le dispositif de guidage et de maintien et la dernière spire de la dernière couche de dite conduite déjà ou encore enroulée pour le trancanage de dite conduite souple autour et contre desdits supports d'enroulement, ledit élément de support formant de préférence une tour ou un portique s'étendant au moins dans une direction perpendiculaire Z₂Z₂' à et au dessus dudit pont, à proximité dudit plateau tournant,
- un dit dispositif de guidage et maintien de conduite souple étant apte à permettre le trancanage d'une première conduite souple autour et contre ledit fût central en mode dit carrousel, comprenant :
   (i) un dispositif de traction de la conduite apte à tensionner ladite première portion de première conduite, ledit dispositif de traction étant de préférence un tensionneur à chenilles, et
   (ii) des moyens aptes à déplacer verticalement ladite première portion de première conduite souple, de préférence en déplaçant verticalement ledit dispositif de traction, pour que ladite première portion de dite première conduite puisse être tensionnée sensiblement horizontalement par ledit dispositif de traction pour permettre le trancanage de la première conduite en mode carrousel avec plusieurs couches coaxiales de spires jointives superposées, et
- un dit dispositif de guidage et maintien de conduite souple étant en outre apte à permettre le trancanage des deuxième à (n + 2)^{ième} conduites souples autour et contre lesdits premiers à respectivement (n+1)^{ièmes} poteaux intermédiaires en mode dit de type panier tournant, comprenant :
   (i) un dispositif de traction de la conduite, de préférence un tensionneur à chenilles, situé à une hauteur supérieure à celle dudit flasque supérieur et desdits poteaux intermédiaires et poteaux de retenue périphérique et
   (ii) des moyens aptes à déplacer en translation horizontale dans une direction transversale perpendiculaire YY' au dit axe central de rotation Z₁Z₁', ladite première portion de deuxième à respectivement (n+2)^{ième} conduite souple s'étendant en position inclinée, notamment incurvée, entre le dispositif de maintien et de guidage et la deuxième à respectivement (n+2)^{ième} conduite enroulée, de préférence en déplaçant horizontalement ledit dispositif de traction, pour permettre le trancanage de ladite conduite en mode dit de type panier tournant en plusieurs couches superposées de spires jointives concentriques juxtaposées reposant sur un même plan.

On entend par « accrochage réversible » que lesdits accessoires peuvent être montés puis démontés pour libérer la place au dessus dudit plateau tournant.

Le dispositif selon l'invention est particulièrement avantageux en ce qu'il permet d'installer une pluralité de conduites souples de différentes natures et notamment de différents diamètres avec le minimum de contrainte quant à l'ordre de mise en oeuvre desdites conduites, comme il sera explicité ci-après.

Avantageusement, lesdites premières conduites enroulées en mode carrousel seront des conduites de plus petit diamètre et de plus grande longueur, tandis que des conduites de plus grand diamètre seront avantageusement enroulées en mode panier tournant à titre de deuxième(s) à (n+2)^{ème(s)} conduites, ces dernières pouvant être enroulées ou désenroulées dans n'importe quel ordre.

Ainsi, un stockage mixte selon la présente invention, présente l'avantage de pouvoir stocker sur un même dispositif de stockage une pluralité de conduites, dont des premières conduites très longues et de plutôt faible diamètre en mode carrousel, et une pluralité de ièmes, avec i=2 à (n+2) conduites flexibles en mode panier tournant, ces dernières étant soit stockées les unes sur les autres, soit dans des paniers individuels successifs disposés radialement les uns après les autres, c'est-à-dire de diamètres moyens croissants.

On comprend que ledit pont comprend à proximité dudit plateau tournant au moins un deuxième élément d'accrochage d'au moins un dit élément de support.

On entend ici par trancanage, de façon connue, l'action de guider en vue d'enrouler/dérouler ladite conduite disposée en spires jointives :
- soit par déplacement vertical de ladite conduite synchronisé avec la rotation dudit plateau tournant, lesdites spires étant alors juxtaposées les unes au-dessus des autres en superposition,
- soit par déplacement horizontal de ladite conduite, synchronisé avec la rotation dudit plateau tournant, lesdites spires reposant sur un même plan ayant des diamètres d'enroulement continument variables, car disposées en spirales, juxtaposées concentriquement l'une à côté de l'autre.

On comprend que pour une dite première conduite enroulée en mode carrousel :
- les spires de la première couche sont appliquées contre ledit fût et présentent un diamètre d'enroulement le plus petit, et les spires de la deuxième couche appliquées contre celles de la première couche présentent un diamètre d'enroulement plus grand, les couches cylindriques suivantes appliquées successivement contre les couches précédentes et présentent un diamètre d'enroulement croissant, de sorte que deux spires de deux couches juxtaposées présentent des diamètres d'enroulement différents, et
- la première couche est formée par trancanage montant de la conduite pour superposer hélicoïdalement successivement les unes au dessus des autres les spires depuis ledit plateau tournant sur laquelle repose la première spire inférieure jusqu'à un flasque supérieur contre lequel vient buter la face supérieure de la dernière spire supérieure, tandis que la deuxième couche est réalisée par trancanage descendant depuis la sous-face du flasque supérieur jusqu'à atteindre le plateau tournant. Ceci explique pourquoi il est requis de maintenir en tension la première portion de conduite entre le dispositif de maintien et de guidage et la partie de conduite déjà ou encore enroulée sur le support d'enroulement, à défaut de quoi, non seulement la conduite ne pourrait pas rester enroulée de manière stable, mais en outre, il ne serait pas possible de réaliser l'enroulement en trancanage descendant.

Pour ce mode d'enroulement en mode carrousel on met en oeuvre un support d'enroulement à paroi de préférence continue en forme de fût central cylindrique ou cylindro-tronconique car la conduite devant être trancanée sous tension, elle risquerait - si on mettait en oeuvre une pluralité de support d'enroulement du type poteaux répartis régulièrement en cercle - de connaître des courbures excessives notamment inférieure à son rayon de courbure minimale au niveau des points de contact avec lesdits poteaux, risquant ainsi d'endommager la structure interne desdites conduites souples.

On comprend que pour une deuxième conduite enroulée en mode panier tournant :
- la première couche est formée par dépose de celle-ci sur le plateau tournant et éloignement progressif de ladite portion de conduite par rapport aux dits poteaux internes depuis la première spire dite interne juxtaposée au dit poteau interne jusqu'à la dernière spire dite externe arrivant contre lesdits deuxièmes poteaux intermédiaires (« sens aller »), puis,
- la deuxième couche est formée par dépose de la deuxième conduite par dessus la première couche en déplaçant en sens inverse (« sens retour ») ladite portion de conduite, c'est-à-dire en rapprochant la conduite desdits poteaux internes, et
- ainsi de suite en sens aller et sens retour de déplacement de la première portion de conduite non encore enroulée pour les couches suivantes, (ou poteaux internes de support d'enroulement) depuis la première spire dite externe superposée à la dernière spire dite externe de la couche précédente où elle est stabilisée par retenue grâce aux dits deuxièmes poteaux intermédiaires jusque vers lesdits poteaux internes et ainsi de suite en sens inverse de déplacement de la portion de conduite non encore enroulée pour la couche suivante ; lesdits déplacements de ladite portion de conduite en éloignement (« sens aller ») puis en rapprochement (« sens retour ») par rapport aux dits poteaux internes à des fins de trancanage étant synchronisés avec la rotation du plateau tournant.

D'autre part, dans ce mode d'enroulement de type « panier tournant », l'espace entre deux séries successives de i^{èmes} et (i+1)^{ièmes} poteaux intermédiaires, n'est pas recouverte par un dit flasque pouvant obstruer le passage, ce qui autorise le bon enroulement/déroulement de ladite première portion de conduite non tensionnée contre lesdits éléments de support, dans la mesure où ladite première portion de conduite n'est pas disposée horizontalement, mais est inclinée depuis le dispositif de maintien et de guidage vers lesdits éléments de support d'enroulement situés au-dessous dudit fût central, et dans la mesure où ladite première portion de conduite doit pouvoir être déplacée en translation horizontale dans cet espace.

On entend dans la présente description par « disposés circulairement », que lesdits éléments sont disposés le long d'un cercle et notamment s'agissant de poteaux, les bases et les sommets desdits poteaux sont disposés le long d'un cercle.

On comprend que ladite première portion de deuxième ou ième conduite est inclinée et généralement incurvée entre ledit dispositif de maintien et de guidage et la conduite déjà enroulée ou encore enroulée, et passe dans l'espace libre entre les séries successives de dits support d'enroulement, ledit espace n'étant pas obstrué par un dit flasque.

Pour le mode d'enroulement en mode panier tournant de la deuxième ou ième conduite, la mise en oeuvre d'une pluralité de poteaux intermédiaires à titre de supports d'enroulement représente un risque moindre de courbure excessive de la deuxième conduite, car la conduite flexible n'est pas sous tension.

Plus particulièrement, le dispositif de stockage et de manutention comprend un seul et même dispositif de guidage et maintien de conduite apte à être déplacé verticalement ou horizontalement à hauteur constante en déplacement relatif par rapport à un deuxième élément de support dudit dispositif de guidage et maintien de conduite souple, ledit deuxième élément support comprenant un portique.

Ce mode de réalisation est le mode préféré de réalisation du dispositif de stockage et manutention de conduite souple car il permet d'éviter la mise en oeuvre de deux équipements distincts ou un même équipement requérant des transformations importantes et difficilement réalisables sur site, en mer ouverte, pour passer d'un enroulement/déroulement en mode carrousel à un enroulement/déroulement en mode panier tournant, évitant ainsi des immobilisations du navire au port couteuses.

Ce dispositif de guidage mixte présente l'avantage de permettre, sans modification notoire, de passer à un trancanage approprié pour l'enroulement/déroulement approprié à un mode carrousel à celui approprié à un mode panier tournant, sans nécessiter de moyens lourds de manutention pour passer d'un mode à un autre comme dans la technique antérieure.

Le mode de réalisation dénommé de type « mixte » est en outre préféré, car il permet de mettre en oeuvre de façon optimale deux conduites souples de différents diamètres.

Les conduites flexibles de relativement plus petit diamètre se mettent plus facilement en enroulement en spires superposées hélicoïdalement selon le mode carrousel, car il est plus difficile de disposer des spires jointives de diamètres de spires croissants concentriques dans un plan selon le mode de panier tournant pour des conduites de petit diamètre.

En outre, des conduites flexibles de relativement plus petit diamètre ont un rayon de courbure minimal également relativement plus petit, qui permettent donc un enroulement sur un fût central de relativement plus petit diamètre, ce qui augmente d'autant la capacité maximale de stockage en mode carrousel en termes de longueur de conduite flexible stockée.

De préférence encore, dans le dispositif de stockage et de manutention selon l'invention, au moins deux conduites souples sont enroulées sur le dispositif de stockage et manutention mixte comprenant :
- au moins une dite première conduite, de préférence une première conduite flexible, de plus petit diamètre enroulée sur un dit fût central en mode carrousel, et
- au moins une dite deuxième à (n+2)^{ième} conduite souple, de préférence de plus grand diamètre enroulés en mode panier tournant.

Avantageusement, ledit plateau tournant est constitué de deux parties concentriques comprenant :
- un premier plateau tournant interne en forme de disque apte à être entraîné en rotation, et
- un deuxième plateau tournant externe de forme annulaire concentrique au dit premier plateau tournant et disposé autour dudit premier plateau tournant, ledit deuxième plateau tournant étant apte à être maintenu immobilisé ou entraîné en rotation concomitamment au dit premier plateau tournant, lorsque ledit premier plateau tournant est entraîné en rotation.

Ce mode de réalisation est avantageux en ce qu'il permet de libérer une surface de pont de dimensions variables selon les capacités de stockage du dispositif de stockage mises en oeuvre, comme il sera explicité ci-après.

Ainsi, ledit premier plateau tournant interne pourra être utilisé en mode carrousel, en mode panier et en mode mixte, auxquels cas le deuxième plateau tournant externe soit ne comprendra aucun poteau si le premier plateau tournant est utilisé en seul mode carrousel, soit ne comprendra que lesdits poteaux de retenue si l'ensemble desdits premier et deuxième plateaux tournants est entraîné concomitamment en rotation et utilisé en mode panier ou en mode mixte, soit comprendra desdits poteaux de retenue et desdits poteaux intermédiaires de support d'enroulement si l'ensemble des deux premier et deuxième plateaux tournants est apte à être entraîné concomitamment en rotation et utilisé en mode panier ou en mode mixte.

La présente invention fournit également un navire de pose en mer de conduites sous-marines souples équipé d'un dispositif selon l'une des revendications 1 à 6, caractérisé en ce que ledit navire comprend un pont comprenant une cavité dans laquelle sont disposés ledit plateau tournant et un dispositif de support et de rotation motorisée du plateau circulaire tournant, la face supérieure dudit plateau circulaire tournant ne dépassant sensiblement pas le niveau de la partie du pont qui lui est immédiatement juxtaposée latéralement, de préférence la périphérie dudit plateau tournant arrivant sensiblement au niveau dudit pont, ledit plateau tournant étant supporté par et coopérant en rotation avec des éléments (3a'-1, 3a'-2, 3a'-4, 3a'-5) du dispositif de support et de rotation au sein de ladite cavité fixés à la structure porteuse (1c, 1l) de la coque du navire, pour y être laissé de manière permanente.

On comprend que chaque partie de la face supérieure dudit plateau tournant ne dépasse pas le niveau de la partie du plan du pont qui lui est juxtaposée, c'est-à-dire la plus proche, dans une direction perpendiculaire au dit plan au niveau de ladite partie de plan.

On entend ici par « structure porteuse de la coque du navire », la structure aussi appelée communément « poutre-navire » (en anglais « hull girder »), dont le rôle est de supporter le navire proprement dit et son chargement tant sur le pont que dans ses cales lorsque la coque est soumise à la poussée d'Archimède. La poutre-navire comporte, de manière connue de l'homme de l'art, des éléments de structure transversaux principaux appelés « couples » (en anglais « frames ») et des éléments de structure transversaux et longitudinaux secondaires appelés « menbrures » ou « plats à boudin » (en anglais « bulb profiles ») ainsi que des éléments de structure longitudinaux en forme de poutre (en anglais « primary beams »), dont la partie supérieure desdits éléments de structure supporte le pont du navire.

On entend donc ici par « pont du navire », la paroi supérieure de la « poutre-navire », cette paroi supérieure est une tôle de forte épaisseur (en anglais « deckl plate »). Elle est en général continue depuis l'arrière du navire, jusqu'à l'avant du navire et vers les côtés, depuis bâbord jusqu'à tribord. Cette paroi supérieure est sensiblement horizontale ou éventuellement légèrement incliné depuis et de part et d'autre de l'axe longitudinal médian du pont vers les bordés respectifs. Le pont est donc constitué, en partie courante, de tôles de forte épaisseur solidaires des dits éléments de structure transversaux de type couples et menbrures et de dits éléments de structure longitudinaux situés en sous-face de ladite tôle de pont.

On comprend que selon la présente invention, le navire comporte une poutre-navire configurée lors de sa construction pour créer une dite cavité apte à recevoir et supporter ledit plateau tournant et son dispositif de support et de rotation ainsi que la charge dudit plateau, notamment ledit dispositif de stockage et manutention de conduites souples et la ou les conduites stockées sur ledit plateau tournant.

Un premier avantage de l'invention porte sur le principe de plateau tournant intégré dans une cavité du pont, donc ne nécessitant pas de démontage dudit plateau tournant, celui-ci pouvant y être laissé de manière permanente. Ceci représente un gain de temps considérable. En effet, du fait que ledit plateau tournant ne dépasse pas sensiblement au-dessus du plan du pont d'une part, et d'autre part, comporte des moyens d'accrochage réversibles d'un dit dispositif de stockage et manutention modulaire, il est possible de monter et démonter ledit dispositif modulaire selon l'invention beaucoup plus facilement et plus rapidement que les dispositifs de stockage et manutention de conduite souple de la technique antérieure, et ce avec des moyens de levage et de manutention très limités, ce qui permet dans certains cas d'effectuer ce type d'opération directement sur site, sans avoir à revenir au port.

Ainsi, grâce au dispositif selon l'invention, l'essentiel du poids de l'équipement, c'est-à-dire le plateau tournant et sa motorisation restent à demeure, car ils sont intégrés de manière permanente au niveau de la cavité du pont du navire et ne nécessitent une manutention lourde qu'à l'occasion de la construction dudit navire ou qu'à l'intégration dudit plateau et dispositif de support et de rotation au sein de la cavité du pont du navire. De même, la structure rigide de support du plateau tournant existant dans l'art antérieur est remplacée par la structure porteuse propre du navire, le cas échéant localement renforcée, et donc reste intégrée de manière permanente au navire dans le dispositif selon l'invention et ne nécessite donc des manutentions lourdes qu'à l'occasion de la construction dudit navire ou qu'à l'intégration dudit plateau et dispositif de support et de rotation au sein de la cavité du pont du navire, les plateau tournant et structure rigide support existant dans l'art antérieur pouvant représenter un poids global de 150 à 750 tonnes voire plus.

Il résulte aussi de cette intégration permanente du plateau tournant et de son dispositif de rotation au sein de ladite cavité, que la rigidité nécessaire dudit plateau est relativement réduite, car ledit plateau ne doit transférer que les seuls efforts résultant de la charge qu'il supporte sans avoir à reprendre en outre des éventuels efforts répétés de torsion et/ou de flexion comme cela serait requis si ledit plateau devait pouvoir être manutentionné pour être déplacé avec son dispositif de support et rotation après chaque utilisation comme dans la technique antérieure.

Plus particulièrement, la structure porteuse dudit plateau tournant comprend un plancher intégré à la poutre-navire et formant partie intégrante de ladite poutre-navire, consistant en un décrochement vers le bas d'une portion sensiblement circulaire du pont, ledit plancher constituant la paroi supérieure de la poutre-navire au sein de ladite cavité et jouant un rôle similaire à celui de la tôle de pont en terme de résistance de ladite poutre-navire.

De préférence, ledit plancher est solidaire d'éléments de renfort supplémentaires au sein de la cavité faisant partie intégrante de la poutre-navire configurée de sorte que la poutre-navire puisse assurer le transfert de la charge constituée par ledit plateau tournant, dudit dispositif de support et de rotation et son chargement et fournir la rigidité requise pour le supportage dudit plateau tournant et son chargement.

Dans un mode particulier de réalisation, ladite structure porteuse de la coque comporte des éléments de renforts supplémentaires au niveau de ladite cavité et ledit dispositif de support de de rotation au sein de ladite cavité comprend au moins:
- un plancher fixé à et supporté par des dits éléments de renfort supplémentaires de ladite structure porteuse de la coque en sous face dudit plancher, et
- des éléments de guidage en rotation, comprenant de préférence des roulettes supportés par ledit plancher, et un arbre de rotation supporté par des éléments de renfort supplémentaires de ladite structure porteuse de la coque en sous face dudit plancher, et
- un moteur et des éléments d'entrainement en rotation du plateau et/ou dudit arbre de rotation par actionnement dudit moteur, supportés par des éléments de structure de ladite structure porteuse de la coque en périphérie de ladite cavité et/ou des dits éléments de renfort supplémentaires e ladite structure porteuse de la coque au niveau de ladite cavité, lesdits éléments d'entrainement en rotation comprenant de préférence des engrenages. Lesdits éléments d'entrainement en rotation peuvent aussi comprendre des galets ou des courroies.

On entend par « éléments de renfort supplémentaires », des éléments de structure additionnels par rapport au reste de la structure porteuse de la coque, aptes à conférer à la structure porteuse de la coque au niveau de la cavité, la capacité reprendre les charges en compression représentées par le plateau et son chargement transférées localement directement à la structure porteuse de la coque du navire au niveau de la cavité, du fait de la fixation directe des éléments de support et de rotation du plateau tournant à la structure porteuse de la coque. Ainsi, il est possible de mettre en oeuvre des dispositifs de stockage et manutention modulaires selon l'invention de grande capacité et donc éventuellement des conduites de grande longueur et/ou de grand diamètre en comparaison avec des dispositifs modulaires supportés par des plateaux tournant rapportés par-dessus le pont du navire dont la poutre-navire n'est pas configurée spécialement avec une cavité et des structures de renforts supplémentaires au sein de la poutre-navire pour supporter le plateau tournant, et ce sans requérir la mise en place sur le pont de structure support de plateau tournant pour reprendre une partie des charges en compression et fournir de la rigidité audit plateau tournant comme c'est le cas dans la technique antérieure.

Plus particulièrement, lesdits éléments de renfort supplémentaires de ladite structure porteuse de la coque supportant ledit plancher au sein de ladite cavité comprennent des couples transversaux rabaissés mais rapprochés les uns des autres dans la direction longitudinale du navire et des poutres longitudinales rabaissées mais rapprochées les unes des autres dans la direction transversale du navire.

Plus particulièrement, lesdits éléments d'accrochage comprennent des rainures et/ou des trous de préférence filetés disposés radialement et/ou circulairement, de préférence régulièrement répartis sur toute la surface du plateau tournant.

Ainsi, il est possible de positionner facilement avec des moyens de manutention très limités, lesdits accessoires de manière à former des supports d'enroulement permettant des enroulements de diamètre variable à la surface du plateau. Lesdites rainures sont de façon connues aptes à coopérer en fixation réversible avec des éléments coopérant avec ou intégré à la partie de structure à la base desdits accessoires et aptes à y coulisser tels que des tasseaux. Lesdits trous étant aptes à coopérer en fixation réversible avec des tiges fixées ou intégrées à la base desdits accessoires.

Selon un premier mode de réalisation préféré, la face supérieure dudit plateau tournant est plane et arrive sensiblement au niveau du plan dudit pont autour dudit plateau tournant.

Selon un autre mode de réalisation, la face supérieure dudit plateau tournant est de forme conique, de préférence centrée dans l'axe longitudinal médian XX' du navire, présentant un demi-angle au sommet α supérieur à 95 grades, de préférence de 98 à 99 grades, de préférence encore de demi-angle au sommet α de valeur sensiblement identique à l'angle d'inclinaison par rapport à la verticale des deux parties planes P₁,P₂ du pont du navire, respectivement en légère pente ß par rapport à l'horizontale vers tribord P₂ et bâbord P₁ à partir d'une arête centrale disposée le long de ladite direction longitudinale axiale médiane XX' du navire.

On comprend que lorsque ledit plateau tournant est un plateau tournant double constitué d'un dit premier plateau tournant interne et d'un dit deuxième plateau annulaire, ledit premier plateau tournant sera de forme conique, tandis que le deuxième plateau tournant de même demi-angle au sommet sera de forme tronconique.

Dans tous les cas, chaque partie dudit plateau tournant, le cas échéant chaque partie dudit deuxième plateau tournant ne dépasse pas, dans une direction perpendiculaire au dit plan, le niveau dudit plan du pont la plus proche qui lui est juxtaposé, c'est-à-dire le plan dudit pont qui est situé du même côté de ladite arête centrale que ladite partie de plateau tournant.

La présente invention fournit encore plus particulièrement, un navire de pose de conduite en mer selon l'invention comportant en outre une tour de pose en J et au moins une dite conduite souple enroulée autour d'un dit dispositif de stockage et manutention comportant un dispositif de maintien et de guidage de portion de conduite s'étendant entre ledit dispositif de maintien et de guidage et la conduite enroulée, ladite conduite comportant une deuxième portion de conduite courbée en forme de chainette soumise à la tension de son seul poids propre s'étendant entre ledit dispositif de maintien et de guidage et une poulie disposée à une hauteur supérieure sur la tour, de préférence au sommet de la tour, et une troisième portion de conduite s'étendant rectilignement dans la tour étant tensionnée à l'aide d'un deuxième dispositif de traction solidaire de ladite tour de pose en J, de préférence du type tensionneur à chenilles.

Les moyens aptes à déplacer verticalement et/ou horizontalement ladite première portion de conduite s'étendant entre ledit dispositif de maintien et de guidage et la conduite déjà ou encore enroulée sur lesdits supports d'enroulement, peuvent comprendre selon les modes de réalisation du dispositif de stockage et de manutention, les variantes suivantes :
1) en mode de réalisation du dispositif de stockage et de manutention dit de type « panier tournant » : un moteur et des rails et/ou glissières de guidage aptes à déplacer horizontalement ledit dispositif de maintien et de guidage le long dudit rail et/ou glissière horizontale supporté(e) par une poutre transversale horizontale d'un portique support dudit dispositif de maintien et de guidage, et
2) en mode de réalisation du type « carrousel » : un moteur et des rails et/ou glissières verticales de guidage aptes à déplacer verticalement ledit dispositif de traction le long dudit rail et/ou glissière supporté(e) par un poteau et/ou une tour portant ledit dispositif de traction, et
3) en mode de réalisation mixte « carrousel »/ « panier tournant » : un moteur apte à déplacer verticalement une dite poutre transversale horizontale supportée par une tour ou des poteaux d'un portique et un moteur apte à déplacer horizontalement ledit dispositif de maintien et de guidage le long de ladite poutre transversale horizontale, et
4) dans tous les différents modes de réalisation, « carrousel », « panier tournant » et/ou mixte, on peut également mettre en oeuvre des moyens annexes tels que des bras articulés, aptes à déplacer ladite première portion de conduite verticalement et/ou horizontalement coopérant avec un dispositif de maintien et de guidage fixe et/ou lui-même apte à être déplacé verticalement et/ou horizontalement.

Plus particulièrement encore, ladite conduite souple est une conduite flexible sous marine.

La présente invention fournit également un procédé de pose d'une conduite souple en mer depuis un navire selon l'invention, dans lequel on réalise les étapes suivantes :
1) on déplace le navire de manière synchronisée avec le défilement de la conduite au niveau dudit deuxième dispositif de traction au sein de la tour de pose en J, de préférence un dit deuxième tensionneur à chenilles, et
2) on déroule ladite conduite en actionnant de manière synchronisée la rotation dudit plateau tournant, et le déplacement de ladite portion de conduite s'étendant entre ledit dispositif de maintien et de guidage et la conduite enroulée, de manière à maintenir la courbure de ladite portion de conduite s'étendant entre ledit dispositif de maintien et de guidage et ladite poulie disposée à une hauteur supérieure sur la tour, avec une courbure en chainette dont la courbure est en tous points supérieure à la courbure minimale acceptable de la conduite souple et telle que de préférence ladite portion de conduite en chainette ne touche pas le pont du navire.

Dans un premier mode de réalisation du procédé selon l'invention, on déroule une dite première conduite souple enroulée en mode carrousel en exerçant une tension sensiblement constante sur la première portion de conduite s'étendant horizontalement entre le dispositif de maintien et de guidage de conduite et la conduite enroulée sur un dit fût central, à l'aide d'un dispositif de traction, de préférence du type tensionneur à chenilles au niveau dudit dispositif de maintien et de guidage de conduite.

Dans un deuxième mode de réalisation du procédé selon l'invention, on déroule une dite deuxième ou (n+2)^{ième} conduite souple enroulée en mode panier tournant sans exercer de tension sur la première portion de conduite s'étendant en position inclinée entre le dispositif de maintien et de guidage de conduite et la conduite enroulée, en synchronisant la vitesse de défilement de la conduite à l'aide d'un dispositif de traction, de préférence du type tensionneur à chenilles au niveau dudit dispositif de maintien et de guidage de conduite, et la vitesse de rotation dudit plateau tournant.

Dans un mode préféré de réalisation du procédé selon l'invention, on met en oeuvre un dispositif de stockage et manutention de type mixte, et on effectue les étapes successives suivantes dans lesquelles :
1) on déroule une dite deuxième ou (n+2)^{ième} conduite souple enroulée en mode panier tournant sans exercer de tension sur ladite première portion inclinée de conduite s'étendant entre le dispositif de maintien et de guidage de conduite et la conduite enroulée, en synchronisant la vitesse de défilement de la conduite à l'aide d'un dispositif de traction, de préférence du type tensionneur à chenilles au niveau dudit dispositif de maintien et de guidage de conduite, et la vitesse de rotation dudit plateau tournant, et
2) lorsque toutes lesdites deuxième(s) à (n+2)^{ième(s)} conduites souples sont déroulées et posées en mer, on retire lesdits poteaux périphériques de retenue et dits poteaux intermédiaires, et
3) on effectue le déroulement et la pose en mer d'une dite première conduite enroulée en mode carrousel en exerçant une tension sensiblement constante sur ladite première portion horizontale de conduite s'étendant en position maintenue sensiblement horizontale entre le dispositif de maintien et de guidage de conduite et la conduite enroulée sur un dit fût central, à l'aide d'un dispositif de traction, de préférence du type tensionneur à chenilles au niveau dudit dispositif de maintien et de guidage de conduite.

Inversement, dans un procédé de stockage par enroulement de deux conduites souples sur un dispositif de stockage et de manutention de type « mixte », on procèdera selon les étapes successives suivantes :
1) enroulement de(s) dite(s) première(s) conduite(s) autour dudit fût central en mode carrousel, et
2) montage des accessoires des compartiments dénommés « panier tournant » comprenant lesdits poteaux internes et dits poteaux intermédiaires formant lesdits supports d'enroulement, puis dits poteaux périphériques de retenue, et
3) enroulement des dites à deuxième à (n+2)^{ièmes} conduites autour desdits poteaux internes ou poteaux intermédiaires formant lesdits supports d'enroulement, en mode panier tournant.

D'autres caractéristiques et avantages de la présente invention ressortiront mieux à la lumière de la description détaillée qui va suivre, faite de manière illustrative et non limitative, en référence aux dessins sur lesquels :
- la figure 1 est une vue de côté d'un navire de pose équipé d'une tour de pose en J et d'un dispositif de stockage et de manutention de conduite souple enroulée en mode dénommé « carrousel », le dispositif n'appartient pas à la présente invention.
- la figure 1A est une vue de côté des divers accessoires dudit carrousel destinés à être solidarisés de façon réversible, c'est-à-dire démontable, à un plateau tournant d'un dispositif de stockage et manutention selon la figure 1 installés sur le pont du navire de pose et sur ledit plateau, ce dernier étant sensiblement en continuité de plan avec ledit pont,
- la figure 1B est une vue de dessus du plateau tournant détaillant les moyens d'accrochage des divers accessoires,
- la figure 1C est une vue de côté du pont d'un navire comportant un plateau tournant d'un dispositif de stockage et manutention qui n'appartient pas à l'invention, ledit plateau tournant étant sensiblement dans le même plan que ledit pont,
- la figure 1D est une vue de côté dudit carrousel de la figure 1 détaillant la séquence de mise en place des différentes spires et couches de conduite souple sur le fût dudit carrousel, en enroulement au stade d'enroulement de l'avant dernière spire au sommet de la troisième couche,
- la figure 2 est une vue de côté d'un navire de pose équipé d'une tour de pose en J et d'un dispositif de stockage et de manutention de conduite souple enroulée selon un mode dénommé « panier tournant », le dispositif n'appartient pas à la présente invention,
- la figure 2A est une vue de dessus du dispositif de stockage de type panier tournant de la figure 2,
- la figure 2B est une vue de côté en coupe partielle à droite selon AA de la figure 2A, détaillant la séquence de mise en place des différentes spires et couches de conduite souple sur le plateau tournant constituant le fond du dispositif de type panier tournant, au stade d'enroulement de la deuxième spire concentrique de la troisième couche superposée au sommet,
- la figure 2C est une vue de dessus du dispositif de trancanage 2 d'un dispositif de type panier tournant de la figure 2, pouvant aussi coopérer avec un dispositif de type carrousel 3 de la figure 1, ou encore un dispositif mixte (figures 3C et 3D) décrit ci-après,

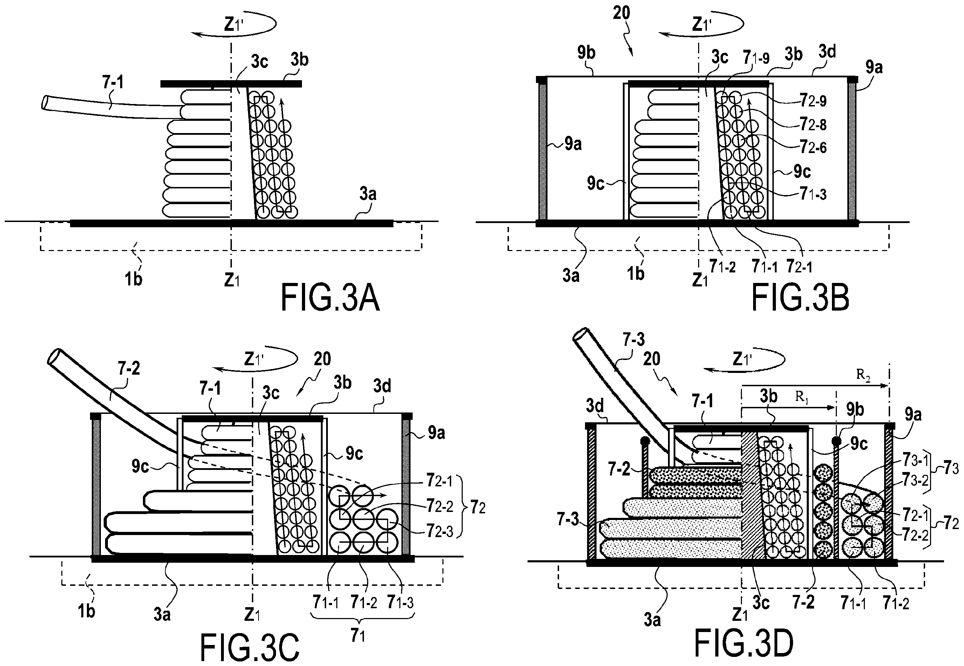

- les figures 3A, 3B et 3C sont des vues de côté, en coupe partielle à droite, décrivant un dispositif de stockage et manutention mixte : carrousel/panier tournant, dans lequel une première conduite souple 7-1 est stockée en mode carrousel enroulée autour d'un fût central (figures 3A, 3B et 3C), et une seconde conduite 7-2 est stockée en mode panier tournant sur la périphérie dudit panier tournant, ladite deuxième conduite étant enroulée autour de premiers poteaux intermédiaires ou poteaux internes 9c formant des deuxièmes supports d'enroulement disposés autour de ladite première conduite enroulée (figures 3B et 3C). Sur la figure 3A, on n'a représenté que la première conduite en cours d'enroulement en mode carrousel. Sur la figure 3B, on a représenté en outre les premiers poteaux intermédiaires 9c servant de deuxième support d'enroulement d'une deuxième conduite en mode panier tournant et en cours d'enroulement en mode panier tournant. Et, sur la figure 3C, on a représenté en outre la deuxième conduite en cours d'enroulement en mode panier tournant sur les accessoires du panier tournant, les poteaux périphériques 9a servant de poteaux de retenue périphérique de la deuxième conduite,
- sur la figure 3D, on a représenté un dispositif de stockage et de manutention de type mixte, carrousel ou panier tournant, sur lequel sont enroulés une première conduite 7₁ en mode carrousel, une deuxième conduite 7₂ en mode panier tournant, et une troisième conduite 7₃ en mode panier tournant,
- la figure 3E représente un fût central d'un dispositif qui n'appartient pas à la présente invention, équipé d'un flasque supérieur 3b au sommet du fût central et d'un flasque circulaire intermédiaire 3b' entourant ledit fût central permettant ainsi d'y enrouler deux premières conduites 7-1a et 7-1b,
- la figure 4 est une vue de côté d'un navire de pose équipé d'une tour de pose en J et d'un dispositif de stockage et de manutention de conduite souple de l'art antérieur du type à motorisation mobile sur rails apte à venir s'adapter successivement sur chacune des bobines installées en ligne les unes derrière les autres sur le pont du navire,
- la figure 5 est une vue de côté d'un navire de pose équipé d'une tour de pose en J, en opération de pose de conduites rigides, par assemblage de rames préfabriquées, au sein de ladite tour de pose en J, lesdites rames étant stockées sur le pont du navire au niveau du plateau tournant d'un dispositif selon l'invention après démontage des accessoires,
- la figure 6A est une vue de dessus d'un navire d'installation équipé d'un plateau tournant centré sur l'axe longitudinal médian XX' du navire, d'un diamètre légèrement inférieur à la largeur totale dudit navire,
- la figure 6B est une vue de dessus d'un navire d'installation équipé d'un plateau tournant double installé en décalage vers bâbord par rapport à l'axe longitudinal médian XX' du navire,
- la figure 7A représente un plateau tournant plan vu en coupe verticale, centré selon l'axe longitudinal XX' du navire comme représenté sur la figure 6A, le pont du navire étant constitué de deux plans P₁ et P₂ disposés en pente d'angle ß respectivement vers bâbord P₁ et tribord P₂ de chaque côté d'une arête centrale disposée dans la direction longitudinale XX' du navire,
- la figure 7B représente une coupe verticale d'un plateau tournant dont la face supérieure S de forme conique centrée dans l'axe longitudinal XX' du navire de demi-angle au sommet a correspondant à la valeur de l'angle d'inclinaison par rapport à la verticale des deux plans inclinés respectivement P1 vers bâbord et P2 vers tribord constituant le pont la du navire.

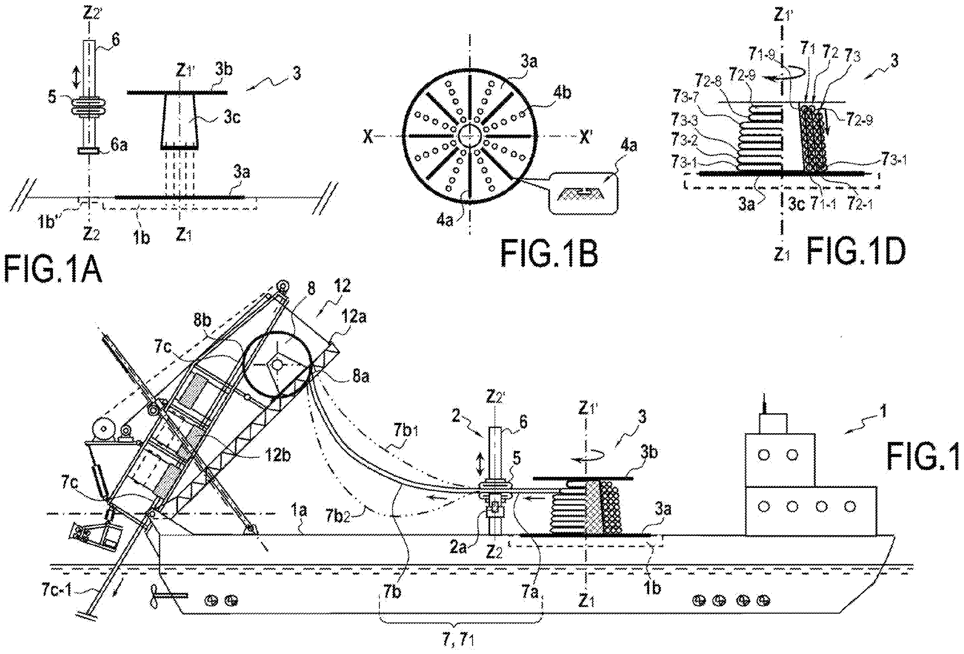

Sur la figure 1 on a représenté en vue de côté un navire de pose 1 équipé d'une tour de pose en J 12 et d'un dispositif de stockage et de manutention de conduite souple, de type carrousel 3. Le dispositif est constitué d'un plateau tournant 3a actionné en rotation autour d'un axe Z₁Z₁' perpendiculaire au dit plateau par des moyens de rotation 3a' représentés sur la figure 1C, et comprenant une motorisation 3a'-1, entraînant en rotation des engrenages 3a'-2 en périphérie dudit plateau 3a, ledit plateau 3a étant entraîné en rotation du fait qu'il coopère avec un arbre central de rotation 3a'-5, de même axe Z₁Z₁' coopérant avec des roulettes 3a'-3 situées en sous-face dudit plateau tournant par-dessus un plancher 3a'-4 fixé sur la structure porteuse de la coque et du pont du navire ou poutre-navire.

De façon connue de l'homme de l'art, la partie le de poutre-navire en dehors de la cavité 1b comprend en sous face du pont, comme représenté figure 1C :
- des éléments de structure transversaux principaux ou couples principaux 1d, et
- des éléments de structure transversaux secondaires ou menbrures encore appelés « plat à boudin » 1g, et
- des poutres primaires longitudinales 1f.

La création d'une cavité 1b est connue de l'homme de l'Art, notamment pour créer une cavité permettre l'accès aux cales du navire depuis le pont.

Pour créer la cavité circulaire 1b, on configure la partie 11 de la poutre-navire, au sein de la cavité 1b, avec des éléments de renforts supplémentaires 1l rabaissés comprenant :
- des éléments de renfort transversaux principaux formant des dits couples 1e et des éléments de renfort transversaux secondaires en forme de menbrures ou plats de boudins 1 k en sous face du plancher 3a-4b,plus rapprochés les uns des autres dans la direction longitudinale XX' par rapport aux couples 1d et menbrures 1g dans la partie 1c de la poutre-navire, et
- des poutres longitudinales rabaissées 1h supportant aussi ledit plancher et l'arbre de rotation 3a'-5, plus rapprochées les unes des autres dans la direction transversale perpendiculaire à la direction longitudinale XX' par rapport aux poutres 1f dans la partie le de la poutre-navire, et
- les moteur 3a'-1 et engrenage 3a'-2 étant fixés à des éléments de structure le de la poutre-navire en bordure de la cavité et/ou des éléments de renfort 1l au sein de la cavité; et
- les roulettes 3a'-3 étant supportées par ledit plancher.

Les roulettes 3a'-3 sont intercalées entre le plateau 3a et la plancher 3a'-4, de préférence sur plusieurs cercles de diamètres décroissants et de même axe vertical Z₁Z₁', pour supporter le poids du plateau des équipements et des conduites flexibles et permettre la rotation du plateau 3a autour de l'axe central de rotation 3a'-5. Pour la clarté des dessins, on n'a représenté sur les différentes figures qu'une seule série de roulettes 3a'-3 réparties sur un même cercle de diamètre sensiblement inférieur au diamètre extérieur dudit plateau tournant. Le moteur 3a'-1 fixé sur un couple transversal 1d ou une membrure 1g supportant le pont en périphérie de la cavité, coopère avec un système de dents en d'engrenages 3a'-2 montées et/ou coopérant avec la périphérie dudit plateau tournant 3a pour en assurer la rotation.

Le plateau tournant est alors installé dans ladite cavité par-dessus lesdites roulettes et plancher. Le plancher 3a'-4 joue le même rôle que la tôle de pont 1a en ce qui concerne la résistance. L'ensemble est intégré dans la cavité 1b du pont du navire tel que représenté sur la figure 1C, de telle manière que le plan supérieur dudit plateau tournant se trouve sensiblement de niveau avec le pont 1a dudit navire.

Ainsi, c'est essentiellement la « poutre-navire » c'est à dire la structure porteuse de la coque du navire qui assure l'intégralité du transfert des charges verticales du plateau tournant et de son chargement, ainsi que la rigidité nécessaire pour le supportage du plateau tournant et de son chargement.

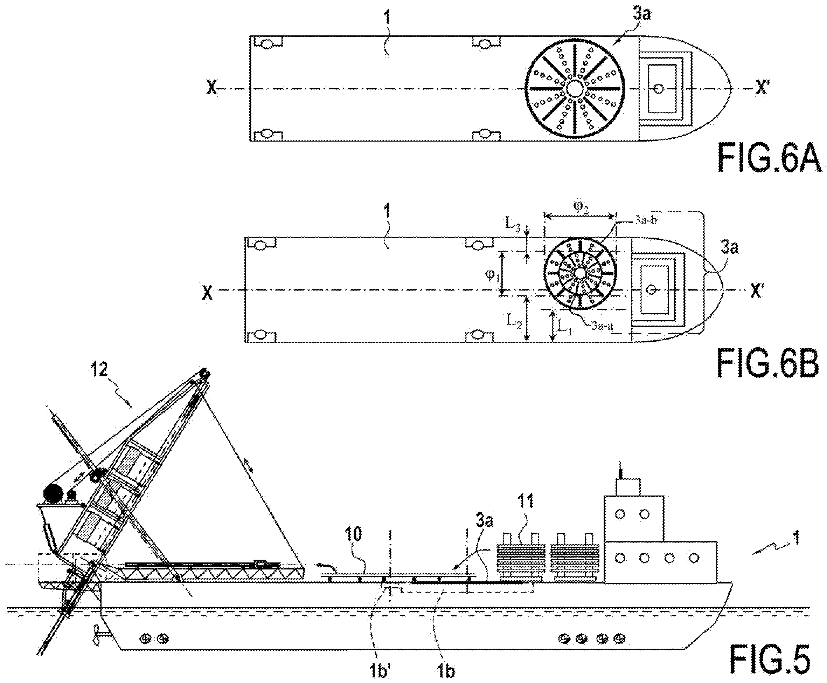

Ledit plateau tournant comporte sur sa face supérieure des éléments d'accrochage 4, 4a-4b permettant de venir solidariser des accessoires variés qui seront détaillés plus avant dans la description ci-après de l'invention. Lesdits éléments d'accrochage 4 sont par exemple des rainures en T 4a similaires à celles couramment utilisées sur les machines outils, telles que représentées en plan et en coupe sur la figure 1B, ou encore des éléments d'amarrage 4b similaires à ceux qui sont utilisés pour arrimer les conteneurs à bord des camions ou des navires porte-conteneurs, ou enfin, tout simplement des trous filetés percés à même le plateau et destinés à recevoir des oreilles d'arrimage. Ainsi, lorsqu'aucun accessoire n'est installé sur ledit plateau tournant, le pont du navire est sensiblement plan et disponible pour transporter des charges ou effectuer des opérations diverses, telles celles représentées sur les figures 4 et 5, à savoir, la pose conventionnelle de conduites souples de type flexibles ou câbles électriques à l'aide de treuils 22a-22d d'axes de rotation parallèles au plan du pont et perpendiculaires à l'axe XX' (figure 4A) ou la pose en J de conduites rigides, par assemblage de rames successives (figure 5), ou encore le transport et la manutention de tous types de structures de fortes capacités et de grandes dimensions, sans qu'il y ait nécessité de démonter les éléments constitutifs dudit plateau tournant 3a et de sa structure de supportage, comme c'est le cas dans l'art antérieur.

En mode carrousel du dispositif de stockage et manutention 3, des accessoires sont installés sur le plateau tournant 3a comme représenté sur la figure 1A. Ces accessoires comportent un premier élément de support d'enroulement constitué par un fût 3c de forme cylindro-tronconique ou cylindrique de préférence de révolution dont l'axe Z₁Z₁' coïncide de préférence avec l'axe dudit plateau tournant 3a, ainsi qu'un flasque supérieur 3b, de préférence circulaire, de même axe vertical ZZ'. Le flasque supérieur 3b est solidaire du fût 3c à son sommet, la base du fût 3c étant rendue solidaire du plateau tournant 3a au niveau des éléments d'accrochage 4. Une conduite 7 est enroulée autour du fût 3c entre le flasque supérieur 3b et le plateau tournant 3a formant un flasque inférieur. Un premier tensionneur à chenilles 5, ou à pneus, connu de l'homme de l'art, disposé entre le dispositif de type carrousel 3 et la tour de pose en J 12 exerce de manière connue une tension sur la première portion 7a horizontale de conduite souple 7 s'étendant entre le tensionneur 5 et la dernière spire de la dernière couche de la conduite enroulée. Cette tension est réglée de façon à ce que ladite tension soit maintenue à une valeur sensiblement constante, par exemple une tension de 5 tonnes, de manière à ce que l'enroulement de ladite conduite sur le carrousel reste organisé comme illustré sur la figure 1D, à savoir que les spires 7i-1 à 7i-1 avec I = 8, de chacune des couches cylindriques 7i avec i = 1 à 3, concentriques où chacune étant constituée de spires hélicoïdales superposées reste stable et que l'ensemble des spires ne s'effondre pas, ce qui conduirait à un chevauchement des spires et/ou risquerait d'endommager gravement ladite conduite flexible. Pour assurer, lors du chargement/enroulement de la conduite sur le carrousel ou de la dépose/déroulement de la conduite, un fonctionnement correct du dispositif de type carrousel 3, on met en oeuvre un dispositif de trancanage 2 apte à déplacer en hauteur le tensionneur à chenilles 5 le long d'un élément de support 6 s'étendant dans une direction Z₂Z'₂ perpendiculaire au dit pont de manière à ce que la première portion 7a de la conduite disposée entre le tensionneur à chenilles 5 et le dispositif 3 reste toujours sensiblement horizontale. Ledit support 6, installé sur bâbord, est constitué d'une tour ou un poteau muni d'éléments de guidages du tensionneur à chenilles 5 et d'une motorisation 2a, la base du poteau 6 étant solidaire en 1b' du pont 1a du navire à proximité du carrousel 3, de préférence le plus près possible. Ainsi lors du chargement/enroulement de la conduite souple 7, 7-1 sur ledit carrousel 3, on met en rotation le plateau 3a dans le sens des aiguilles d'une montre, et on ajuste, de manière connue la position en hauteur du premier tensionneur à chenilles 5 de manière à ce que la première portion 7a de conduite entre le tensionneur 5 et le carrousel 3 reste sensiblement horizontale et que les spires 7₁-1 à 7₁-9 de conduite s'enroulent bien les unes au-dessus des autres, tout en restant en contact intime avec la spire précédente, au fur et à mesure de la montée de la première couche 7₁ la plus proche du fût central, puis que les spires 7₂-9 à 7₂-1 de conduites s'enroulent les unes au-dessous des autres de manière juxtaposée contre le fût central 3c pendant la constitution de la deuxième couche 7₂ jusqu'à rejoindre la plateau tournant et réitérer une remontée du tensionneur à chenilles 5 pour réaliser par enroulement la troisième couche 7₃ de spires 7₃-1 à 7₃-9. Pendant toute la durée du chargement, on maintient une tension sensiblement constante, par exemple 5 tonnes grâce au tensionneur 5, de manière à ce que chacune des spires vienne se positionner contre la précédente.

Sur la figure 1D, la flèche représente le sens en montée, puis en descente, puis à nouveau en montée de la progression des couches 7₁, 7₂ et respectivement 7₃ et des spires 7i-1 à 7i-n avec i = 1 à 3 et n = 9 lors du chargement par enroulement de la conduite souple 7 sur le carrousel 3.

Plus précisément, on réalise la première couche 7₁ depuis la première spire inférieure 7₁-1 reposant sur le plateau tournant 3a jusqu'à la dernière spire supérieure 7₁-9 en dessous du flasque supérieur 3b. Puis, arrivé en haut du fût 3c, l'enroulement commence alors une couche supplémentaire 7₂ à partir d'une première spire supérieure 7₂-9 dessous le flasque supérieur 3b disposé à côté et contre la spire dernière supérieure 7₁-9, de la première couche 7₁, jusqu'à une dernière spire inférieure 7₂-1 de la deuxième couche reposant sur le plateau 3a contre et à côté de la première spire inférieure 7₁-1 de la première couche 7₁. Puis, on forme une troisième couche 7₃ à partir d'une première spire 7₃-1 disposée contre la spire 7₂-1 reposant sur le plateau 3a de la deuxième couche 7₂ jusqu'à la spire supérieure (non représentée) de la troisième couche 7₃ sous le flasque supérieur 3b. Lors des montées et descentes du premier tensionneur à chenilles 5, sa vitesse de montée et de descente est synchronisée avec la vitesse de rotation du plateau tournant. Pendant tout le déroulement ou enroulement de la conduite souple 7 sur le carrousel 3, ledit premier tensionneur à chenilles 5 est opéré en mode dit à tension constante, connu de l'homme de l'art dans le domaine des treuils. Ainsi, si le niveau de tension constante est fixé par exemple à T₀=5 tonnes, si la tension tend à augmenter au-dessus du seuil fixé de T₀, le tensionneur déroulera une certaine longueur, ce qui aura pour effet de ramener la tension à T₀ ; de la même manière, si la tension tend à baisser en dessous du seuil fixé T₀, le tensionneur enroulera une certaine longueur, ce qui aura pour effet de ramener la tension à T₀=5 tonnes.

Plus particulièrement, le premier tensionneur 5 coopère avec des moteurs à vérins hydrauliques associés à une centrale thermique réglés, de manière à ce que ledit premier tensionneur à chenilles 5 exerce une dite traction T₀ sur la portion de conduite 7a. Ainsi, si le plateau tournant 3a tourne de manière à dérouler la conduite souple 7, la tension dans la portion de conduite 7a diminuant, le tensionneur à chenilles est commandé pour automatiquement augmenter la tension qu'il exerce sur la portion de conduite 7a en actionnant la rotation de ses chenilles qui viennent en appui en frottement sur la conduite de manière à ce que la tension résultante exercée sur la portion de conduite 7a par le premier tensionneur à chenilles, soit à nouveau de T₀. Inversement, lors de l'enroulement, si du fait de la rotation du plateau tournant 3a la tension dans la portion de conduite 7a vient à dépasser la tension T₀ dans la portion de conduite 7a, les chenilles dudit premier tensionneur à chenilles 5 vont tourner en sens inverse de manière à déplacer la portion de conduite 7a dans le sens de l'enroulement, c'est-à-dire en direction du carrousel 3 pour ramener la tension résultante dans la portion de conduite 7a à la valeur T₀ et permettre l'enroulement de la conduite souple sur le carrousel 3. Pendant tout le transport, on maintient également une tension dans la portion de conduite 7a, par exemple de 2 à 5 tonnes, de manière à éviter l'effondrement de l'ensemble cylindro-tronconique de la conduite enroulée autour du fût 3c. En effet, à défaut d'exercer cette tension, les dernières spires pourraient avoir tendance à s'écarter du fût, provoquant ainsi la chute des spires suivantes, celles-ci ne se trouvant plus maintenues.

La conduite 7, dans sa portion de conduite 7b, qui s'étend depuis le tensionneur à chenilles 5 jusqu'au sommet de la tour de pose en J 12, adopte une configuration de courbure en chaînette. Une poulie de grande dimension 8 est installée solidaire de la rampe de relevage 2a au sommet de la tour 12, ladite portion 7b de conduite souple entrant en 8a dans la gorge de ladite poulie 8 et la portion de conduite 7c sortant en 8b, sensiblement dans l'axe de pose de ladite tour 12. La conduite souple passe alors dans au moins un deuxième tensionneur à chenilles 12b au seine de la tour, qui maintient la portion de conduite 7c en suspension en 7c-l jusqu'au fond de la mer. Ainsi, lors de la pose, la conduite souple 7 se trouve en tension modérée dans la portion 7a, sensiblement sans tension autre que celle générée par son poids propre dans la portion de conduite 7b en forme de chaînette, puis soumise à la tension de pose générée par le deuxième tensionneur à chenilles 12b dans la portion 7c de par son poids, ladite tension de pose pouvant atteindre 100 à 150 tonnes, voire plus pour les conduites de gros diamètre et les grandes profondeurs d'eau.

On règle le défilement de la conduite lors de son déroulement autour du carrousel 3 et au sein de la tour 12, de manière à ce que la courbure de la portion de conduite 7b reste comprise entre les deux courbes limites 7b-l et 7b-2, de manière à maintenir la courbure de ladite portion de conduite 7b avec une courbure toujours supérieure à la courbure minimale acceptable au niveau de sa jonction avec la poulie 8 comme au niveau de sa jonction avec le tensionneur 5, c'est-à-dire une courbure avec un rayon de courbure supérieur au rayon de courbure minimal acceptable de la conduite.

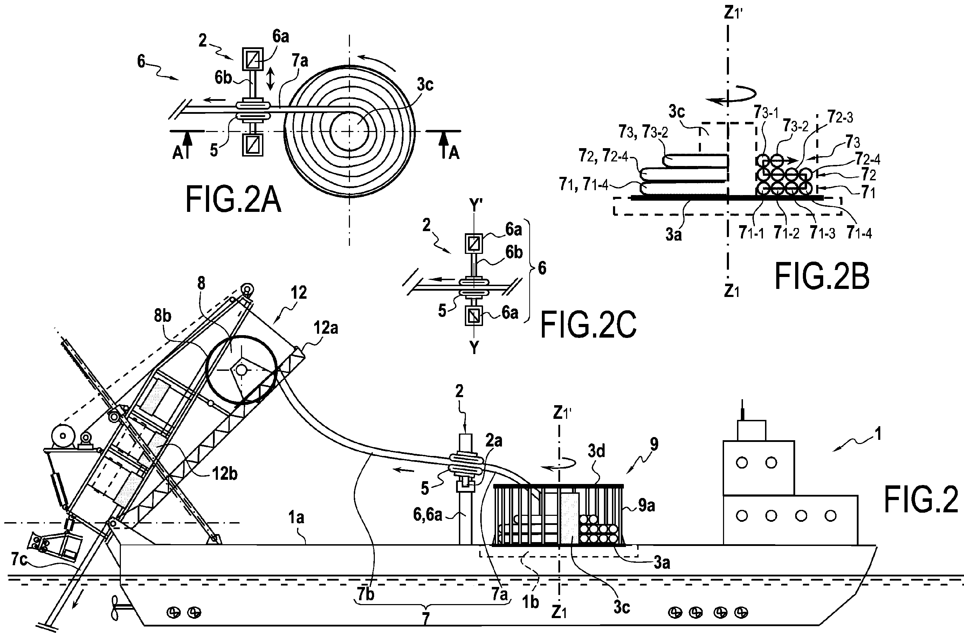

Sur la figure 2, on a représenté en vue de côté un navire de pose 1 équipé d'une tour de pose en J 12 et un dispositif de stockage et manutention du type dénommé « panier tournant » 9. Ledit panier tournant, représenté en coupe partielle à droite, est constitué dudit plateau tournant 3a, sur lequel on dispose un fût central 3c, dont l'axe vertical Z₁Z₁' coïncide avec celui dudit plateau tournant 3a. On dispose à la périphérie du plateau tournant une pluralité de poteaux périphériques de retenue 9a disposés verticalement et répartis de préférence de manière régulière circulairement par rapport à un axe Z₁Z₁' coïncidant avec l'axe du plateau tournant, lesdits poteaux périphériques 9a étant de préférence reliés entre eux par exemple à leur sommet par une virole supérieure 3d dont le diamètre interne est de préférence égal ou supérieur au diamètre du cercle tangent à la face interne de l'ensemble des poteaux 9a. Ainsi, la partie supérieure du panier 9 est entièrement libre, car elle ne comporte pas de flasque supérieur au sommet du fût 3c. Ladite conduite souple 7 est manutentionnée à l'aide d'un dispositif de trancanage 2 comprenant un dit premier tensionneur à chenilles 5 monté sur un portique support 6 à hauteur fixe par rapport au pont la du navire et situé au-dessus de la hauteur de la virole supérieure 3d de sorte que la portion de conduite 7a rejoignant le fût 3c depuis le premier tensionneur à chenilles 5 présente une inclinaison en légère courbure naturelle et non contrainte. Ledit portique 6 est représenté sur les figures 2A et 2C ; il comporte une poutre transversale horizontale 6b dans la direction transversale YY' fixée sur deux poteaux latéraux verticaux 6a, de sorte que ledit premier tensionneur à chenilles 5 monté sur ladite poutre transversale 6b peut se déplacer dans la direction horizontale YY' grâce à une motorisation (non représenté), constituant ainsi un dispositif de trancanage horizontal apte à permettre de diriger la première portion 7a de conduite souple vers le fût 3c du panier tournant dans une direction maintenue en permanence sensiblement tangente à la spire en formation, comme représenté figure 2A.

Dans cette construction du type « panier tournant » tel que montré sur les figures 2A et 2B, on réalise ainsi 3 couches 7₁, 7₂ et 7₃ superposées, chacune comprenant p=4 spires concentriques juxtaposées 7i-1 à 7i-p avec i = 1 à 3, les unes contre les autres. Plus précisément, la première couche part d'une première spire 7₁-1 reposant sur le plateau tournant 3a et disposée contre la périphérie du fût central 3c, puis par rotation du plateau tournant et déplacement du tensionneur à chenilles 5 le long de la poutre transversale 6b, on réalise une deuxième spire 7₁-2 concentrique disposée contre la première spire 7₁-1 et ainsi de suite, jusqu'à une quatrième spire concentrique 7₁-4 arrivant en périphérie du plateau tournant 3a sur laquelle elle repose et contre les faces internes d'une série de poteaux périphériques 9a accrochés sur le plateau 3a et permettant de retenir les différentes couches superposées 7₁, 7₂ et 7₃. Lorsque la première couche est complète, la conduite vient buter contre les poteaux périphériques et ne peut alors s'échapper que vers le haut, ce qui amorce naturellement la couche suivante. Ainsi, pour la réalisation de la deuxième couche 7₂, on part d'une spire périphérique 7₂-4 disposée contre la face interne des poteaux 9a au-dessus de la dernière spire 7₁-4 de la première couche, puis en déplaçant en sens inverse le tensionneur à chenilles 5 dans la direction horizontale le long de la poutre transversale 6b et en tournant le plateau 3a, on réalise une spire concentrique 7₂-3 de diamètre légèrement inférieur et disposé contre la face interne de la conduite flexible constituant la spire 7₂-4 et ainsi de suite, on réalise les spires 7₂-2, puis 7₂-1 de diamètres décroissants.

On comprend que les poteaux de retenue 9a limitent la position extrême des spires 7i-4, et permettent d'initier, lors du chargement la couche supérieure. Ces poteaux de retenue 9a donnent de plus à l'ensemble une stabilité de forme et tout particulièrement une stabilité à la couche supérieure.

Dans cette construction du dispositif de stockage et manutention en mode panier tournant 9, le premier tensionneur à chenilles 5 ne fait que maintenir la conduite souple 7 de telle sorte que ces première et deuxième portions de conduite 7a et 7b adoptent une certaine courbure sans exercer de tension significative dans la première portion de conduite 7a entre ledit premier tensionneur à chenilles 5 et le dispositif panier tournant 9 contrairement à ce qui se passe pour le premier mode de réalisation du dispositif de type carrousel 3.

Sur la figure 2B, on a représenté le sens de réalisation d'un chargement par enroulement couche après couche, illustrant en vue de côté la progression des spires et des couches dans ce deuxième mode de réalisation de dispositif de stockage et manutention de type panier tournant 9, chaque couche comportant ici 4 spires. Lorsque l'on amène la conduite 7 vers le panier tournant 9 pour l'enroulement de la conduite ou lorsque l'on extrait la conduite souple 7 du panier tournant 9 pour son déroulement et pose en mer, on synchronise la rotation du plateau tournant et le déplacement en translation du dispositif de trancanage dans la direction horizontale, ainsi que la vitesse de rotation des chenilles du premier tensionneur à chenilles 5, de sorte que les courbures des courbes 7a et 7b soient acceptables, notamment avec un rayon de courbure supérieur au rayon de courbure minimal acceptable de la conduite.

Comme représenté sur la figure 2A, lors de l'installation sur site, le premier tensionneur à chenilles 5 est actionné pour dérouler et extraire la conduite souple 7 du dispositif de type panier tournant 9, pour la diriger vers la poulie 8 sur la tour 12, puis vers le deuxième tensionneur à chenilles 12b. Ainsi, seule la portion 7c s'étendant dessous le deuxième tensionneur 12b est soumise à une tension de pose importante, les deux autres portions de conduite 7a et 7b n'étant soumises qu'à de faibles tensions de manutention, c'est à dire quelques tonnes, voire moins.

Sur la figure 3C on a illustré en vue de côté une première variante d'un mode de réalisation de dispositif stockage et manutention mixte carrousel / panier tournant 20 selon l'invention. Dans cette variante de réalisation, on installe tout d'abord un fût tronconique 3c et un flasque supérieur 3b dont le diamètre externe est inférieur au diamètre du plateau tournant 3a, ledit diamètre du flasque supérieur 3b étant supérieur à celui de la dernière couche 7₃ de la première conduite 7-1 en mode carrousel comme décrit précédemment en liaison avec les figures 1 et 1A-1D à stocker en mode carrousel. Puis, on stocke par enroulement une première conduite 7-1 sur le dispositif en mode carrousel autour d'un fût central 3c disposé coaxialement au dit plateau tournant 3a, comme représenté sur la figure 3A. Après chargement/enroulement de la première conduite flexible 7-1, on vient installer les accessoires qui vont transformer le dispositif en mode panier tournant comme suit. On installe successivement une série de premiers poteaux intermédiaires dénommés « poteaux internes » 9c répartis de préférence de manière uniforme et de préférence de manière circulaire, de préférence solidarisés à leur base aux éléments d'accrochage sur le plateau tournant 3a et à leur sommet au niveau de l'extérieur du flasque supérieur 3b au sommet du fût 3c. L'ensemble desdits premiers poteaux intermédiaires peut jouer alors le rôle de deuxième support d'enroulement équivalent au fût du dispositif de type panier tournant 9 de la figure 2 pour l'enroulement d'une deuxième conduite 7-2. Puis, on installe une série de poteaux périphériques de retenue 9a disposés comme indiqué ci-dessus en périphérie du plateau tournant 3a, solidarisés à leur base à des éléments d'accrochage 4 du plateau tournant 3a et de préférence solidarisés en tête entre eux par une virole circulaire 3d. On effectue alors le chargement/enroulement de la deuxième conduite flexible en mode panier tournant comme décrit précédemment, en liaison avec les figures 2 et 2A-2C.

Lesdits poteaux périphériques 9a sont répartis de préférence régulièrement le long de la périphérie circulaire du plateau 3a, et les poteaux internes 9c sont disposés à proximité de la dernière couche périphérique 7₃ de la première conduite 7-1 enroulée sur le fût 3c.

Puis, on stocke par enroulement une deuxième conduite souple 7-2 en mode panier tournant. Pour ce faire, on enroule la première spire 7₁-1 de la première couche 7₁ de la deuxième conduite 7-2 contre la face externe des poteaux internes 9c de support d'enroulement de la deuxième conduite 7-2, puis comme décrit dans le mode panier tournant, on réalise les deuxième spires 7₁-2 et troisième spire 7₁-3 concentriques juxtaposées côte à côte jusqu'à la face interne des poteaux périphériques 9a, puis on réalise l'enroulement des deuxième couche 7₂ constituée des spires 7₂-3, 7₂-2, puis 7₂-1 respectivement depuis les poteaux de retenue périphériques 9a jusque vers les supports d'enroulement ou poteaux internes 9c, et troisième couche 7₃ comme décrit précédemment depuis les poteaux internes 9c vers les poteaux de retenue 9a. Pour l'installation des conduites et leur déroulement, on effectuera en premier le déroulement et la pose de la deuxième conduite 7-2 en mode panier tournant, puis on démontera les accessoires spécifiques au panier tournant, à savoir les poteaux internes 9c et poteaux de retenue périphériques 9a pour effectuer le déroulement et la pose de la première conduite 7-1 en mode carrousel.

Ce démontage est nécessaire, car autrement, la première portion 7a de conduite en sortie du dispositif en mode carrousel ne pourrait pas s'étendre horizontalement pendant son trancannage, lesdits poteaux intermédiaires 9c et poteaux de retenue 9a l'en empêchant.

Sur la figure 3D, on a représenté une deuxième variante de réalisation d'un dispositif mixte carrousel/panier tournant 20 selon l'invention. On stocke en premier une première conduite flexible 7-1 en mode carrousel sur un fût central 3c comme décrit précédemment. Puis, on installe deux séries de premiers et respectivement deuxièmes poteaux intermédiaires 9c et 9b. La série de premiers poteaux intermédiaires 9c est répartie sur un cercle de rayon R1, la série de deuxièmes poteaux intermédiaires 9b étant répartie sur un second cercle de rayon R2 supérieur à R1. Ainsi, on peut charger en mode panier tournant une deuxième conduite flexible 7-2 contre lesdits premiers poteaux intermédiaires ou poteaux internes 9c jusqu'au dit deuxièmes poteaux intermédiaires 9b faisant office de deuxièmes poteaux de retenue de ladite deuxième conduite 7-2. Sur la figure 3D, la deuxième conduite 7-2 est enroulée contre les poteaux internes 9c selon cinq couches superposées d'une seule spire disposée hélicoïdalement. Les deuxièmes poteaux intermédiaires 9b servent de troisième support d'enroulement d'une troisième conduite 7-3 dont on a représenté sur la figure 3D trois couches 7₁ à 7₃ de deux spires concentriques juxtaposées 7ᵢ-p avec i = 1 à 3 et p = 1 à 2. La troisième conduite 7-3 est chargée en enroulement en mode panier tournant après avoir toutefois installé les poteaux périphériques de retenue 9a assurant la retenue de la troisième conduite flexible 7-3.

Lors de la pose en mer desdites conduites, on doit d'abord réaliser le déroulement et la pose de l'une quelconque des deuxième ou troisième conduites 7-2 ou 7-3 indifféremment. On remarquera que si les deuxième et troisième conduites 7-2 et 7-3 avaient été stockées l'une à la suite de l'autre, c'est-à-dire l'une par-dessus l'autre dans un même compartiment entre desdits poteaux internes 9c et desdits poteaux périphériques de retenue 9a, il serait obligatoire de décharger et poser la conduite enroulée en dernier, c'est-à-dire la conduite supérieure. On n'aurait donc plus le choix, comme c'est le cas grâce à un dispositif mixte avec une pluralité de séries de poteaux intermédiaires comme selon l'invention. Sur la figure 3D, on a utilisé deux séries de poteaux intermédiaires 9c et 9b. On pourra toutefois utiliser avantageusement autant de séries de poteaux intermédiaires que nécessaire en fonction du nombre de conduites à stocker de manière à garder la plus grande souplesse possible pour leur installation sur site. Dans tous les cas de figure, il conviendra d'avoir déroulé et posé toutes les conduites stockées en mode panier tournant pour pouvoir dérouler et poser la première conduite enroulée en mode carrousel après avoir retiré les poteaux internes 9c et différents poteaux intermédiaires et poteaux périphériques de retenue 9b et 9a.

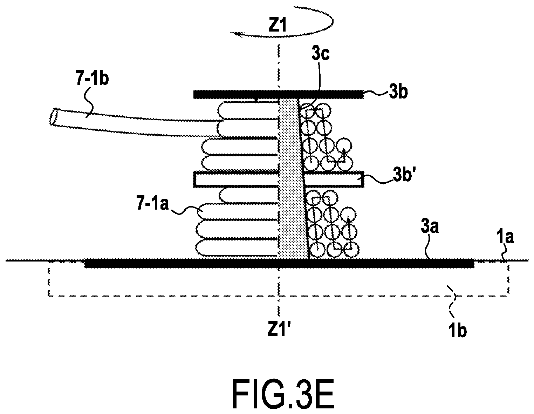

Sur la figure 3E, on a représenté un exemple dans lequel le fût central est équipé d'un flasque circulaire supérieur 3b à son sommet et est entouré d'un flasque circulaire intermédiaire 3b' de même diamètre à mi-hauteur, de sorte que l'on peut enrouler une première conduite 7-1a à partir du plateau tournant 3a jusqu'en sous face du flasque intermédiaire 3b', puis une deuxième première conduite 7-1b depuis le flasque intermédiaire 3b' jusqu'en sous face du flasque supérieur 3b. Dans ce cas, on peut enrouler/dérouler les deux premières conduites 7-1a et 7-1b dans n'importe quel ordre.

Sur la figure 4, on a représenté en vue de côté la pose conventionnelle par grande profondeur de conduites flexibles 7 à partir d'une série de treuils ou bobines à axe horizontal 22a-22b-22c-22d sur lequel sont enroulés des portions de conduite flexible. Une motorisation de bobine 20 est apte à coulisser sur des rails 21 et à s'ajuster successivement sur chacune des bobines 22a-22b-22c-22d, pour les soulever individuellement et les mettre en rotation successivement de manière à dévider les différentes portions de conduite flexible 7 sur laquelle elles sont enroulées. Ainsi, lorsque la première bobine 22a sur laquelle une conduite était enroulée est dévidée, on sécurise l'extrémité de ladite conduite 7. Puis, on redépose la bobine 22a vide sur son support 22-1 et on déplace la motorisation de bobine 20 sur la bobine suivante 22b et l'on connecte l'extrémité de conduite enroulée sur la deuxième bobine 22b à l'extrémité sécurisée de la conduite flexible déjà posée. Puis, on continue la pose de la conduite flexible par déroulement des différentes portions de conduite flexible sur les différentes bobines suivantes 22c-22d. Ce type de bobine 22a-22b présente en général un diamètre de 8 à 12 m et une largeur de 5 à 8m, mais ne permet de stocker que des longueurs limitées de portions de conduite, la bobine chargée pouvant peser de 350 à 750 tonnes, voire plus.

En comparaison, le stockage en mode carrousel tel que représenté figure 1 et figures 3A-3D, est avantageux dans le cas de pose de conduites de très grandes longueurs, car il permet de stocker des conduites de plus grandes longueurs et/ou de plus grands diamètres en évitant les problèmes de raccordement que l'on rencontre lorsque la conduite est stockée en plusieurs tronçons sur plusieurs bobines. Dans le cas de conduites flexibles de grand diamètre, ce stockage conventionnel sur treuils selon la figure 4 est souvent impossible, car le rayon de courbure minimal de ladite conduite flexible est très grand, notamment jusqu'à 5m voire plus, ce qui nécessiterait des bobines 22a-22d de très grande taille que l'on ne saurait alors plus manipuler. Le stockage en mode panier tournant tel que présenté figure 2 et figures 3C-3D est bien adapté aux conduites de plus grand diamètre à grand rayon minimal de courbure, car il permet d'en stocker des longueurs unitaires importantes sans risque de courbure à rayon inférieur au rayon minimal de courbure. Le stockage mixte tel que décrit en référence aux figures 3A-3C est préféré, car il permet de stocker en mode carrousel contre le fût central 3c une longueur importante de première conduite 7-1 de petit ou moyen diamètre, et en périphérie autour desdits poteaux internes 9c et deuxièmes poteaux intermédiaires 9b, une deuxième conduite 7-2, voire une troisième conduite 7-3 de longueur importante et de fort diamètre en mode panier tournant. Le diamètre du cercle le long duquel sont disposés les poteaux internes 9c constituant les éléments de support de l'enroulement de la deuxième conduite du panier tournant du dispositif mixe doit être supérieur au diamètre minimum de courbure de ladite deuxième conduite flexible 7-2, alors que le fût central 3c présenterait un diamètre trop faible, donc incompatible avec le stockage d'une telle conduite 7-2 de gros diamètre. Ce mode d'enroulement de type panier tournant est donc avantageux pour les conduites flexibles longues et de plus grand diamètre que l'on ne peut pas enrouler sur un fût de faible diamètre compte tenu de son rayon de minimum de courbure trop important.

On peut enrouler des conduites de petit ou moyen diamètre inférieur à 200 mm sur des longueurs de 1 à 200 km sur un fût 3c de 1 à 15m de diamètre et 3 à 10 m de hauteur, avec un dispositif de type carrousel de petit ou moyen diamètre. Et, avec un dispositif de type panier tournant, on peut enrouler des conduites de plus grands diamètres, notamment supérieurs à 200 mm et sur des longueurs supérieures aussi à 1 km, le cercle des poteaux internes 9c représentant un diamètre supérieur à 8 m, notamment de 12 à 30 m.

A titre d'exemple, un plateau tournant 3a de 30 m de diamètre capable de supporter une charge de 5000 tonnes permet de stocker une conduite sur une hauteur de 6m comme suit :
- en mode carrousel : 150 km de câble électrique de diamètre 150mm et de poids linéaire 25kg/ml, soit environ 76 couches de 40 spires, représentant un poids total d'environ 4000 tonnes,
- en mode panier tournant : 12.5 km de conduite flexible de diamètre 500 mm, de poids linéaire 350kg/ml et de rayon minimum de courbure R=5m, soit environ 12 couches de 18 spires, représentant un poids total d'environ 4500 tonnes
- en mode mixte selon la figure 3C :
   - en mode carrousel : 10 km d'ombilical 7-1 de diamètre 200 mm de poids linéaire 45kg/ml, soit environ 15 couches de 30 spires, représentant un poids total d'environ 450 tonnes plus,
   - en mode panier tournant : 18.5 km de conduite flexible 7-2 de diamètre 400 mm, de poids linéaire 200kg/ml et de rayon minimum de courbure R=6m, soit environ 15 couches de 20 spires, représentant un poids total d'environ 3700 tonnes, l'ensemble représentant alors un poids total d'environ 4150 tonnes.
- en mode mixte selon la figure 3D :
   - en mode carrousel : 22.5 km d'ombilical 7-1 de diamètre 100 mm de poids linéaire 15kg/ml, soit environ 20 couches de 60 spires, représentant un poids total d'environ 350 tonnes, plus
   - en mode panier tournant dans un premier corridor circulaire de diamètre de fût D1=10m et de 1m de largeur : 850m de conduite flexible de diamètre 400mm, de poids linéaire 180kg/ml et de rayon minimum de courbure R=4m, soit environ 13 couches de 2 spires, représentant un poids total d'environ 160 tonnes, plus
   - en mode panier tournant dans un deuxième corridor circulaire de diamètre de fût D2=14m et de 3m de largeur: 3900m de conduite flexible de diamètre 450mm, de poids linéaire 300kg/ml et de rayon minimum de courbure R=4m, soit environ 13 couches de 6 spires, représentant un poids total d'environ 1200 tonnes, plus
   - en mode panier tournant dans un troisième corridor circulaire de diamètre de fût D3=22m et de 2.5m de largeur: 3900m de conduite flexible de diamètre 600mm, de poids linéaire 450kg/ml et de rayon minimum de courbure R=6m, soit environ 10 couches de 5 spires, représentant un poids total d'environ 1800 tonnes, l'ensemble représentant alors un poids total d'environ 3510 tonnes.

Sur la figure 6A on a représenté un plateau tournant 3a de 30m de diamètre et de 8000t de capacité installé sur l'avant et à l'axe du pont d'un navire d'installation.

Sur la figure 6B on a représenté un plateau tournant double 3a de 20m de diamètre et de 4500t de capacité installé sur l'avant du pont d'un navire d'installation, ledit plateau double 3a étant déporté sur bâbord de manière à laisser un passage libre sur tribord lorsque ledit plateau est équipé en mode carrousel, en mode panier tournant, ou en mode mixte. Le plateau tournant double est constitué d'un premier plateau tournant interne 3a-a de diamètre ϕ₁, en forme de disque et d'un second plateau tournant externe 3a-b de forme annulaire disposés concentriquement au dit premier plateau tournant, indépendant dudit premier plateau tournant, de diamètre extérieur ϕ₂ tel que ϕ₂>ϕ₁. Les deux plateaux sont dans un même plan et sensiblement dans le plan du pont du navire. La motorisation agit sur le plateau interne 3a-a, et le second plateau 3a-b peut être soit immobilisé pendant que ledit premier plateau est entraîné en rotation, soit solidarisé à ce dernier et entraîné concomitamment en rotation avec ledit premier plateau, soit apte à être entraîné en rotation indépendamment dudit premier plateau, selon la capacité de stockage voulue. Ainsi, pour un stockage de capacité maximale, on solidarise ensemble les premier et second plateaux tournants et l'on dispose d'une capacité de stockage maximale de diamètre ϕ₂. Si l'on cherche une capacité réduite, on laisse ledit second plateau tournant immobilisé, solidarisé directement au pont du navire, et l'on n'entraîne en rotation que ledit premier plateau tournant, de sorte que l'on ne dispose alors que d'une capacité réduite correspondant au diamètre ϕ₁ du premier plateau tournant 3a-3. L'avantage de cette dernière disposition réside dans le passage libre sur le pont du navire à coté du dispositif, qui correspond alors à un vaste corridor de largeur L₂ lorsque l'on utilise seulement ledit premier plateau tournant 3a-a alors qu'il n'est que d'une largeur réduite L₁ lorsque l'on utilise le dispositif à capacité maximale, correspondant à l'ensemble du premier et second plateaux tournants. Ce corridor de dimension plus large permet d'installer des équipements complémentaires, ce qui constitue un grand avantage dans de nombreuses opérations d'installations sur les champs pétroliers en mer, en raison de la souplesse du dispositif.

Pour les opérations de pose de pipe conventionnelle avec des rames de 50m de conduite rigide 10 constituées à partir d'éléments unitaires 11 de conduite stockée sur le pont du navire et avec une tour 12 de type JLT, on peut démonter lesdits accessoires 3c-3b,9a-9b-9c et laisser en place le plateau 3a, comme présenté sur la figure 5, car il est au niveau du pont et n'interfère donc pas avec les équipements que l'on pose dessus.

Le fait que le plateau tournant 3a soit intégré dans une cavité 1b permet d'éviter une perte de temps éventuelle importante s'il fallait démonter le plateau 3a pour libérer le pont 1a.

En effet, du fait que le plateau tournant est intégré à la coque en continuité du plan avec celui du pont, il n'est pas nécessaire de le retirer lorsque l'on veut utiliser le pont pour d'autres installations, ce qui épargne d'avoir à immobiliser le bateau pendant plusieurs jours au port pour cette opération et donc représente un avantage économique important.

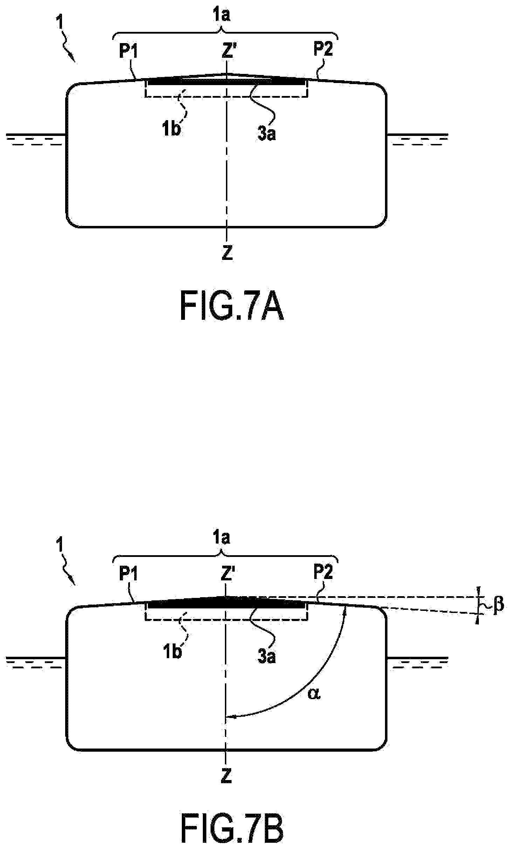

Le pont 1a d'un navire présente en général deux plans P₁ et P₂ en légère pente ß par rapport à l'horizontale, de moins de 5%, soit de 1 à 2%, vers bâbord P₁ et vers tribord P₂, à partir d'une arête centrale axiale XX', de manière à ce que l'eau de pluie ou les embruns soient dirigés vers les bordés du navire pour rejet à la mer : un tel pont ne constitue donc pas un plan en tant que tel. Ainsi, ledit plateau tournant sera de préférence plan et sera installé de telle manière qu'il ne dépasse en aucun point dudit pont du navire comme montré sur la figure 7A. Ainsi, lorsqu'il n'est pas utilisé, il existera dans certaines zones du pont un léger décalage entre ledit pont et ledit plateau tournant que l'on compensera par un calage, par exemple en bois, ledit calage redonnant au pont une continuité de surface permettant d'y installer les équipements requis. Ce calage localisé sera d'épaisseur variable selon l'emplacement et variera de 20 à 200-300 mm selon le diamètre du plateau tournant et la structure du pont du navire.

Toutefois, on réalisera avantageusement un plateau tournant non pas plan mais légèrement conique montré figure 7B, dont le demi-angle a au sommet coïncidera avec l'angle d'inclinaison des plans P₁ et P₂ du pont du navire sur bâbord et sur tribord par rapport à un axe vertical perpendiculaire à ladite arête centrale axiale XX', soit un angle α de plus de 95 grades ou un angle ß de moins de 5 grades, plus particulièrement un angle ß de 1 à 2 grades c'est-à-dire un angle au sommet 2α du cône de 98 à 99 grades. On installera alors de préférence un tel plateau tournant conique dans l'axe du navire comme montré sur la figure 6A et sur la figure 7B. Sur la figure 7B, le plateau tournant conique est disposé de telle sorte que les parties dudit plateau tournant situées de chaque côté de ladite arête centrale XX' ne dépasse pas du plan P₁ ou P₂ du pont situé du même côté de l'arête centrale XX' dans une direction perpendiculaire par rapport au dit plan du pont et le sommet dudit plateau tournant ne dépasse pas en hauteur, la hauteur de l'arête central XX' dudit pont. En d'autres termes, lesdits plans P₁ et P₂ sur bâbord et respectivement sur tribord dudit pont, sont disposés tangentiellement à chaque partie dudit plateau tournant disposé du même côté que ledit plan bâbord P₁ ou respectivement tribord P₂.

Un plateau tournant selon l'invention sera typiquement réalisé en acier et présentera un diamètre de 5 à 50 m et une épaisseur de 100 à 800 mm.

Un fût central 3c sera réalisé en tôle mécano-soudée et présentera une hauteur de 3 à 10 m avec un diamètre de 1 à 10 m pour le mode carrousel et de 5 à 15 m pour le mode panier tournant.

Le poteau ou portique 6 équipé du tensionneur à chenilles et système de trancanage sera positionné au plus près de l'extérieur du flasque supérieur 3b du carrousel en pratique à moins de 5 m, de préférence encore à moins de 1 m.

Le plateau tournant 3a sera positionné sur le pont à une distance suffisante de la tour de pose en J 12, de façon à ce que le rayon de courbure de la conduite soit supérieur au moins à 3 fois le rayon de courbure minimum toléré de la conduite dans la portion 7b s'étendant depuis ledit tensionneur à chenilles et le sommet de la tour. Ainsi, le plateau tournant 3a sera plutôt disposé plus proche du côté du navire opposé à la tour que de la tour.

Dans un mode de réalisation, le navire de pose n'est pas équipé d'une tour de pose, mais d'une goulotte, en général située sur l'arrière du navire. C'est le cas notamment pour des poses de conduites à faible profondeur, notamment inférieure à 500 m.

Dans un mode de réalisation, pour réaliser le trancanage afin que la conduite flexible arrive en permanence en tangence à la spire en cours d'enroulement ou déroulement, on préfère ne pas déplacer le tensionneur à chenilles et plutôt le faire coopérer avec un moyen de guidage tel qu'une goulotte et un bras articulé apte à se déplacer latéralement et donc dans la direction transversale (mode panier tournant = trancanage horizontal) du navire YY' ou dans la direction verticale ZZ' (mode carrousel = trancanage vertical).

Des tensionneurs à tension constante, à chenilles ou à pneus, ainsi que les systèmes de trancanage pour treuils et paniers tournants sont connus de l'homme de l'art, notamment commercialisés par la Société HUISMAN (Hollande).

## Revendications

1. Dispositif de stockage et manutention modulaire (20) de première(s) à (n+2)^{ième(s)} conduites souples n étant un nombre entier de 0 à 10, par enroulement et déroulement desdites conduites souples (7-1, 7-2, 7-3), comprenant :
a) un dit plateau circulaire tournant (3a) et un dispositif de rotation motorisée (3a-1) du plateau tournant (3a) autour de son axe central vertical (Z₁Z₁'), ledit plateau tournant étant disposé sur un plan (1a) et présentant sur sa surface supérieure des éléments d'accrochage (4, 4a-4b) auxquels sont accrochés de manière réversible des supports d'enroulement (3c, 9a, 9c), lesdits éléments d'accrochage (4, 4a-4b) étant disposés circulairement et à différentes distances radiales par rapport à l'axe central vertical (Z₁Z₁') de rotation dudit plateau tournant, et
b) desdits supports d'enroulement s'étendant dans une direction perpendiculaire (ZZ') audit plan et au-dessus dudit plateau tournant comprenant :
b.1) un premier support d'enroulement (3c) d'au moins une première conduite souple (7-1), le dit premier support d'enroulement présentant une paroi continue en forme de fût central cylindrique ou cylindro-tronconique (3c) disposé coaxialement (Z₁Z₁') audit plateau tournant (3a), de diamètre inférieur à celui du plateau tournant, ledit fût central étant surmonté d'au moins un flasque circulaire supérieur (3b), le ou lesdits flasque(s) présentant un diamètre supérieur à celui dudit fût central et inférieur à celui dudit plateau tournant, et
b.2) une série d'une pluralité de premiers poteaux intermédiaires dénommés poteaux internes (9c) formant des deuxièmes supports d'enroulement d'une deuxième conduite souple (7-2), lesdits premiers poteaux intermédiaires (9c) étant disposés circulairement par rapport à l'axe central de rotation (Z₁Z₁') dudit plateau à une même distance radiale constante dudit axe (Z₁Z₁') supérieure à celle dudit premier support d'enroulement, lesdits premiers poteaux intermédiaires (9c) étant de préférence de même hauteur et solidarisés entre eux à leurs sommets par fixation sur la périphérie dudit flasque supérieure (3b), et
b.3) lorsque n est différent de 0, des deuxièmes à (n+1)^{ièmes} poteaux intermédiaires formant des supports d'enroulement de troisième(s) (7-3) à respectivement (n+2)^{ième(s)} conduite(s) souple(s) et formant des poteaux de retenue de deuxième(s) (7-2) à respectivement (n+2)^{ième(s)} conduite(s) souple(s), lesdits deuxièmes à respectivement (n+1)^{ièmes} poteaux intermédiaires (9b) étant disposés circulairement par rapport à l'axe central de rotation (Z₁Z₁') dudit plateau à une même distance radiale constante dudit axe (Z₁Z₁') supérieure à celle des premiers à respectivement nièmes poteaux intermédiaires (9c,9b), les différents poteaux d'une même série de deuxièmes à (n+1)^{ièmes} poteaux intermédiaires étant de préférence de même hauteur et réunis successivement entre eux à leurs sommets par une virole circulaire (3d), et
b.4) des poteaux périphériques de retenue (9a) disposés circulairement par rapport à l'axe central de rotation (Z₁Z₁') dudit plateau à une même distance radiale constante dudit axe (Z₁Z₁') supérieure à celle des (n+1)^{ièmes} poteaux intermédiaires (9c, 9b), les différents poteaux de retenue périphérique (9a) étant de préférence de même hauteur et réunis successivement entre eux à leurs sommets par une virole circulaire (3d),
c) des première(s) à (n+2)^{ième(s)} dites conduites souples comprenant :
c.1) au moins une dite première conduite souple (7-1) enroulée en mode dit carrousel en couche(s) coaxiale(s) (7₁, 7₂, 7₃) autour dudit premier support d'enroulement, chaque couche comprenant plusieurs spires jointives superposées hélicoïdalement à une même distance radiale dudit axe ZZ', telle que les spires (7ᵢ-1 à 7ᵢ-I, avec i= 1 à k) d'une même couche (7₁, 7₂, 7₃) soient superposées par enroulement hélicoïdal depuis la spire inférieure (7₁-1, 7₂-1, 7₃-1) appliquée contre ledit plateau tournant ou un flasque intermédiaire (3b') jusqu'à la spire supérieure venant buter en sous face dudit flasque supérieur ou d'un flasque intermédiaire (3b), les différentes couches (7₁, 7₂, 7₃) coaxiales étant juxtaposées de diamètres croissants depuis la première couche (7₁) appliquée contre ledit fût central jusqu'à la dernière couche (7₃) la plus éloignée radialement dudit axe central (Z₁Z₁'), et
c.2) desdites deuxième(s) à respectivement (n+2)^{ième(s)} conduite(s) souple(s) enroulées en mode dit du type panier tournant en au moins une couche (7₁, 7₂, 7₃) de spires jointives reposant sur un même plan, chaque couche comprenant au moins une spire, lesdites couches étant superposées depuis la première couche (7₁) reposant sur ledit plateau tournant jusqu'à la dernière couche (7₃,7ₘ) en dessous du sommet des supports d'enroulement de ladite conduite, les spires (7ᵢ-1 à 7ᵢ-p et i=1 à m) d'une même couche étant coaxiales et successivement juxtaposées sur un même plan et de diamètres croissants depuis une spire dite interne (7₁-1, 7₂-1, 7₃-1) appliquée contre les dits poteaux intermédiaires (9c,9b) jusqu'à une spire dite externe (7ᵢ-p avec i=1 à m) venant buter contre des dits poteaux de retenu pour des deuxième à (n+1)^{ième} conduites souples, et
c.3) une (n+2)^{ième} conduite souple butant sur lesdits poteaux périphériques de retenue (9a).

2. Dispositif selon la revendication 1, **caractérisé en ce que** n est un nombre entier de 1 à 5.

3. Dispositif de stockage et manutention modulaire (20) de conduites souples selon la revendication 1 ou 2, **caractérisé en ce qu'**il comprend en outre :
- un dispositif de trancanage (2) comprenant au moins un élément de support (6) d'au moins un dispositif de guidage et maintien de conduite souple (5) apte à permettre le déplacement vertical et horizontal d'une dite première portion (7a) de conduite souple (7) s'étendant entre le dispositif de guidage et de maintien (5) et la dernière spire de la dernière couche de dite conduite déjà ou encore enroulée pour le trancanage de dite conduite souple (7, 7₁ à 7₃) autour et contre desdits supports d'enroulement (3c, 9b, 9c), ledit élément de support (6) formant de préférence une tour ou un portique (6) s'étendant au moins dans une direction perpendiculaire (Z₂Z₂') à et au dessus dudit pont, à proximité (1b) dudit plateau tournant,
- un dit dispositif de guidage et maintien de conduite souple (5) étant apte à permettre le trancanage d'une première conduite souple (7-1) autour et contre ledit fût central (3) en mode dit carrousel, comprenant :
(i) un dispositif de traction (5) de la conduite apte à tensionner ladite première portion (7a) de première conduite (7-1), ledit dispositif de traction (5) étant un tensionneur à chenilles, et
(ii) des moyens (2a) aptes à déplacer verticalement ladite première portion (7a) de première conduite souple (7-1), pour que ladite première portion (7a) de première conduite puisse être tensionnée sensiblement horizontalement par ledit dispositif de traction (5) pour permettre le trancanage de la première conduite en mode carrousel avec plusieurs couches coaxiales (7₁,7₂,7₃) de spires jointives superposées, et
- un dit dispositif de guidage et maintien de conduite souple (5) étant en outre apte à permettre le trancanage des deuxième à (n+2)^{ième} conduites souples (7-2, 7-3) autour et contre lesdits premiers à respectivement (n+1)^{ièmes} poteaux intermédiaires en mode dit de type panier tournant, comprenant :
(i) un dispositif de traction (5) de la conduite, constitué d'un tensionneur à chenilles,
(ii) situé à une hauteur supérieure à celle dudit flasque supérieur et desdits poteaux intermédiaires et poteaux de retenue périphérique et
(iii) des moyens (2a) aptes à déplacer en translation horizontale dans une direction transversale perpendiculaire (YY') au dit axe central de rotation (Z₁Z₁'), ladite première portion (7a) de deuxième à respectivement (n+2)^{ième} conduite souple (7-2, 7-3) s'étendant en position inclinée entre le dispositif de maintien et de guidage et la deuxième à respectivement (n+2)^{ième} conduite enroulée, pour permettre le trancanage de ladite conduite en mode dit de type panier tournant en plusieurs couches superposées (7₁, 7₂, 7₃) de spires jointives concentriques juxtaposées reposant sur un même plan.

4. Dispositif selon la revendication 3, **caractérisé en ce qu'**il comprend un seul et même dispositif de traction (5) de conduite apte à être déplacé verticalement ou horizontalement à hauteur constante en déplacement relatif par rapport à un dit élément de support (6) dudit dispositif de guidage et maintien de conduite souple (5), ledit élément support comprenant de préférence un portique (6).

5. Dispositif selon l'une des revendications 1 à 4, **caractérisé en ce qu'**au moins deux conduites souples sont enroulées sur le dispositif de stockage et manutention comprenant :
- au moins une dite première conduite (7-1), de plus petit diamètre enroulée sur un dit fût central en mode carrousel, et
- au moins une deuxième à (n+2)^{ième} conduite souple (7-2, 7-3), de plus grand diamètre que ladite première conduite enroulée en mode panier tournant.

6. Dispositif selon l'une des revendications 1 à 5, **caractérisé en ce que** ledit plateau tournant (3a) est constitué de deux parties concentriques comprenant :
- un premier plateau tournant interne en forme de disque (3a-a) apte à être entraîné en rotation, et
- un deuxième plateau tournant externe de forme annulaire (3a-b) concentrique au dit premier plateau tournant et disposé autour dudit premier plateau tournant, ledit deuxième plateau tournant étant apte à être maintenu immobilisé ou entraîné en rotation concomitamment au dit premier plateau tournant, lorsque ledit premier plateau tournant est entraîné en rotation.

7. Navire de pose en mer (1) de conduites sous-marines souples équipé d'un dispositif selon l'une des revendications 1 à 6, **caractérisé en ce que** ledit navire comprend un pont (1a) comprenant une cavité (1b) dans laquelle sont disposés ledit plateau tournant (3a) et un dispositif de support et de rotation motorisée (3a') du plateau circulaire tournant (3a), la face supérieure dudit plateau circulaire tournant (3a) ne dépassant sensiblement pas le niveau de la partie du pont (1a) qui lui est immédiatement juxtaposée latéralement, la périphérie dudit plateau tournant arrivant sensiblement au niveau dudit pont, ledit plateau tournant étant supporté par et coopérant en rotation avec des éléments (3a'-1, 3a'-2, 3a'-4, 3a'-5) du dispositif de support et de rotation (3a') au sein de ladite cavité (1b) fixés à la structure porteuse (1c,1l) de la coque du navire, pour y être laissé de manière permanente.

8. Navire de pose selon la revendication 7, **caractérisé en ce que** ladite structure porteuse de la coque comprend, au niveau de ladite cavité, des éléments de renfort supplémentaires et ledit dispositif de support et de rotation (3a') au sein de ladite cavité comprend au moins:
- un plancher (3a'-4) fixé à et supporté par des dits éléments de renfort supplémentaires (le, 1h, 1k) de ladite structure porteuse de la coque en sous face dudit plancher, et
- des éléments de guidage en rotation (3a'-3) supportés par ledit plancher, et un arbre de rotation (3a'-5) supporté par des éléments de renfort supplémentaires (1h) de ladite structure porteuse de la coque en sous face dudit plancher, et
- un moteur (3a'-1) et des éléments d'entrainement en rotation(3a'-2) du plateau et dudit arbre de rotation par actionnement dudit moteur, supportés par ladite structure porteuse de la coque au niveau et en périphérie de ladite cavité.

9. Navire de pose (1) selon la revendication 7 ou 8, **caractérisé en ce que** lesdits élément d'accrochage comprennent des rainures (4a) et/ou des trous de préférence filetés (4b) disposés radialement et/ou circulairement sur la surface du plateau tournant.

10. Navire selon l'une des revendications 7 à 9, **caractérisé en ce que** la face supérieure dudit plateau tournant (3a) est plane et arrive sensiblement au niveau du plan dudit pont autour dudit plateau tournant.

11. Navire de pose selon l'une des revendications 7 à 10, **caractérisé en ce que** la face supérieure dudit plateau tournant est de forme conique, centrée dans l'axe longitudinal médian (XX') du navire, présentant un demi-angle au sommet (α) supérieur à 95 grades, de demi-angle au sommet (α) de valeur sensiblement identique à l'angle d'inclinaison par rapport à la verticale des deux parties planes (P₁, P₂) du pont du navire, respectivement en légère pente (ß) par rapport à l'horizontale vers tribord (P₂) et bâbord (P₁) à partir d'une arête centrale disposée le long de ladite direction longitudinale axiale médiane (XX') du navire.

12. Navire de pose de conduite en mer (1) selon l'une des revendications 7 à 11, **caractérisé en ce que** ledit navire comporte en outre une tour de pose en J (12) et au moins une dite conduite souple (7, 7-1 à 7-3) enroulée autour d'un dit dispositif de stockage et manutention (20) comportant un dispositif de maintien et de guidage de dite première portion de conduite (7a) s'étendant entre ledit dispositif de maintien et de guidage et la conduite enroulée, ladite conduite comportant une deuxième portion de conduite courbée (7b) en forme de chainette soumise à la tension de son seul poids propre s'étendant entre ledit dispositif de maintien et de guidage (5) et une poulie (8) disposée à une hauteur supérieure sur la tour (12), et une troisième portion de conduite (7c) s'étendant rectilignement dans la tour étant tensionnée à l'aide d'un deuxième dispositif de traction (12b) solidaire de ladite tour de pose en J (12).

13. Navire selon l'une des revendications 7 à 12, **caractérisé en ce que** ladite conduite souple est une conduite flexible sous-marine (1).

14. Procédé de pose d'une conduite souple (7,7') en mer depuis un navire (1) selon la revendication 12 ou 13, **caractérisé en ce que** l'on réalise les étapes suivantes :
1) on déplace le navire de manière synchronisée avec le défilement de la conduite au niveau dudit deuxième dispositif de traction au sein de la tour de pose en J (12), et
2) on déroule ladite conduite en actionnant de manière synchronisée la rotation dudit plateau tournant, et le déplacement de ladite première portion de conduite (7a) s'étendant entre ledit dispositif de maintien et de guidage (5) et la conduite enroulée, de manière à maintenir la courbure de ladite deuxième portion de conduite (7b) s'étendant entre ledit dispositif de maintien et de guidage (5) et ladite poulie (8) disposée à une hauteur supérieure sur la tour(2), avec une courbure en chainette dont la courbure est en tous points supérieure à la courbure minimale acceptable de la conduite souple et telle que ladite portion de conduite en chainette ne touche pas le pont (1a) du navire.

15. Procédé selon la revendication 14, **caractérisé en ce que** l'on effectue les étapes successives suivantes dans lesquelles :
1) on déroule une dite deuxième ou (n+2)^{ième} conduite souple (7-2, 7-3) enroulée en mode panier tournant sans exercer de tension sur ladite première portion (7a) inclinée de conduite s'étendant entre le dispositif de maintien et de guidage de conduite et la conduite enroulée, en synchronisant la vitesse de défilement de la conduite à l'aide d'un dispositif de traction, de préférence du type tensionneur à chenilles au niveau dudit dispositif de maintien et de guidage de conduite, et la vitesse de rotation dudit plateau tournant, et
2) lorsque toutes lesdites deuxième(s) à (n+2)^{ième(s)} conduites souples sont déroulées et posées en mer, on retire lesdits poteaux périphériques de retenue (9a) et dits poteaux intermédiaires (9b, 9c), et
3) on effectue le déroulement et la pose en mer d'une dite première conduite (7-1) enroulée en mode carrousel en exerçant une tension sensiblement constante sur ladite première portion horizontale (7a) de conduite s'étendant en position maintenue sensiblement horizontale entre le dispositif de maintien et de guidage de conduite et la conduite enroulée sur un dit fût central.

## Patentansprüche

1. Modulare Vorrichtung zur Lagerung und Handhabung (20) einer (von) ersten bis (n+2)ten flexiblen Leitung(en), wobei n eine ganze Zahl von 0 bis 10 ist, durch Auf- und Abwickeln der flexiblen Leitungen (7-1, 7-2, 7-3), umfassend:
a) einen kreisförmigen Drehteller (3a) und eine Vorrichtung zum motorisierten Drehen (3a-1) des Drehtellers (3a) um seine vertikale Mittelachse (Z₁Z₁'), wobei der Drehteller auf einer Ebene (1a) angeordnet ist und auf seiner Oberseite Einhakelemente (4, 4a-4b) aufweist, an denen Wickelträger (3c, 9a, 9c) reversibel festgehakt sind, wobei die Einhakelemente (4, 4a-4b) kreisförmig und in unterschiedlichen radialen Abständen in Bezug auf die vertikale Drehmittelachse (Z₁Z₁') des Drehtellers angeordnet sind, und
b) Wickelträger, die sich in einer Richtung senkrecht (ZZ') zu der Ebene und oberhalb des Drehtellers erstrecken, umfassend:
b.1) einen ersten Träger zum Aufwickeln (3c) wenigstens einer ersten flexiblen Leitung (7-1), wobei der erste Wickelträger eine durchgehende Wand in Form eines zylindrischen oder zylindrisch-kegelstumpfförmigen mittleren Schaftes (3c) aufweist, der zu dem Drehteller (3a) koaxial (Z₁Z₁') angeordnet ist, einen kleineren Durchmesser als der Drehteller aufweist, wobei über dem mittleren Schaft wenigstens ein oberer kreisförmiger Flansch (3b) angebracht ist, wobei der oder die Flansch(e) einen Durchmesser aufweisen, der größer als derjenige des mittleren Schafts und kleiner als derjenige des Drehtellers ist, und
b.2) eine Reihe einer Vielzahl von ersten Zwischenpfosten, die als Innenpfosten (9c) bezeichnet werden, welche zweite Träger zum Aufwickeln einer zweiten flexiblen Leitung (7-2) bilden, wobei die ersten Zwischenpfosten (9c) in Bezug auf die mittlere Drehachse (Z₁Z₁') des Tellers in einem gleichen konstanten radialen Abstand von der Achse (Z₁Z₁'), der größer als derjenige des ersten Wickelträgers ist, kreisförmig angeordnet sind, wobei die ersten Zwischenpfosten (9c) vorzugsweise eine gleiche Höhe aufweisen und an ihren obersten Punkten durch Befestigung an dem Umfang des oberen Flansches (3b) fest untereinander verbunden sind, und
b.3) wenn n von 0 verschieden ist, zweite bis (n+1)te Zwischenpfosten, die Träger zum Aufwickeln einer (von) dritten (7-3) bis jeweils (n+2)ten flexiblen Leitung(en) bilden und die Pfosten zum Halten einer (von) zweiten (7-2) bis jeweils (n+2)ten flexiblen Leitung(en) bilden, wobei die zweiten bis jeweils (n+1)ten Zwischenpfosten (9b) in Bezug auf die mittlere Drehachse (Z₁Z₁') des Tellers in einem gleichen konstanten radialen Abstand von der Achse (Z₁Z₁'), welcher größer ist als derjenige der ersten bis jeweils nten Zwischenpfosten (9c, 9b), kreisförmig angeordnet sind, wobei die verschiedenen Pfosten einer gleichen Reihe von zweiten bis (n+1)ten Zwischenpfosten vorzugsweise eine gleiche Höhe aufweisen und nacheinander an ihren obersten Punkten über einen kreisförmigen Ring (3d) untereinander verbunden sind, und
b.4) umfangseitige Haltepfosten (9a), die in Bezug auf die mittlere Drehachse (Z₁Z₁') des Tellers in einem gleichen konstanten radialen Abstand von der Achse (Z₁Z₁'), welcher größer ist als derjenige der (n+1)ten Zwischenpfosten (9c, 9b), kreisförmig angeordnet sind, wobei die verschiedenen umfangseitigen Haltepfosten (9a) vorzugsweise eine gleiche Höhe aufweisen und nacheinander an ihren obersten Punkten über einen kreisförmigen Ring (3d) untereinander verbunden sind,
c) (eine) erste bis (n+2)te flexible Leitung(en), umfassend:
c.1) wenigstens eine erste flexible Leitung (7-1), die im sogenannten Karussell-Modus in (einer) koaxialen Lage(n) (7₁, 7₂, 7₃) um den ersten Wickelträger herum aufgewickelt ist, wobei eine jede Lage mehrere nebeneinanderliegende, spiralförmig übereinander angeordnete Windungen in einem gleichen radialen Abstand von der Achse ZZ' umfasst, derart, dass die Windungen (7ᵢ-1 bis 7ᵢ-I, wobei i = 1 bis k) einer gleichen Lage (7₁, 7₂, 7₃) durch spiralförmiges Aufwickeln von der unteren Windung (7₁-1, 7₂-1, 7₃-1) aus, die an dem Drehteller oder einem Zwischenflansch (3b') anliegt, bis zu der oberen Windung, die an der Unterseite des oberen Flansches oder eines Zwischenflansches (3b) anschlägt, übereinander angeordnet sind, wobei die verschiedenen koaxialen Lagen (7₁, 7₂, 7₃) mit zunehmenden Durchmessern von der ersten Lage (7₁), die an dem mittleren Schaft anliegt, bis zu der letzten Lage (7₃), die von der Mittelachse (Z₁Z₁') radial am weitesten entfernt ist, nebeneinander angeordnet sind, und
c.2) (eine) zweite bis jeweils (n+2)te flexible Leitung(en), die im sogenannten drehkorbartigen Modus in wenigstens einer Lage (7₁, 7₂, 7₃) aus nebeneinanderliegenden Windungen, welche auf einer gleichen Ebene aufliegen, aufgewickelt sind, wobei eine jede Lage wenigstens eine Windung umfasst, wobei die Lagen von der ersten Lage (7₁), welche auf dem Drehteller aufliegt, bis zu der letzten Lage (7₃, 7ₘ) unterhalb des obersten Punktes der Träger zum Aufwickeln der Leitung übereinander angeordnet sind, wobei die Windungen (7ᵢ-1 bis 7ᵢ-p und i = 1 bis m) einer gleichen Lage koaxial sind und nacheinander auf einer gleichen Ebene und mit zunehmenden Durchmessern von einer sogenannten inneren Windung (7₁-1, 7₂-1, 7₃-1), die an den Zwischenpfosten (9c, 9b) anliegt, bis zu einer sogenannten äußeren Windung (7ᵢ-p, wobei i = 1 bis m ist,), die an Haltepfosten für eine zweite bis (n+1)te flexible Leitungen anschlägt, nebeneinander angeordnet sind, und
c.3) eine (n+2)te flexible Leitung, welche an den umfangseitigen Haltepfosten (9a) anschlägt.

2. Vorrichtung nach Anspruch 1, **dadurch gekennzeichnet, dass** n eine ganze Zahl von 1 bis 5 ist.

3. Modulare Vorrichtung zur Lagerung und Handhabung (20) von flexiblen Leitungen nach Anspruch 1 oder 2, **dadurch gekennzeichnet, dass** sie ferner umfasst:
- eine Verlegevorrichtung (2), die wenigstens ein Element zum Tragen (6) wenigstens einer Vorrichtung zum Führen und Halten einer flexiblen Leitung (5) umfasst, die geeignet ist, die vertikale und horizontale Bewegung eines ersten Abschnitts (7a) einer flexiblen Leitung (7), das sich zwischen der Führungs- und Haltevorrichtung (5) und der letzten Windung der letzten Lage einer bereits oder noch aufgewickelten Leitung erstreckt, für das Verlegen der flexiblen Leitung (7, 7₁ bis 7₃) um und an den Wickelträgern (3c, 9b, 9c) zu ermöglichen, wobei das Tragelement (6) vorzugsweise einen Turm oder einen Portalrahmen (6) bildet, der sich wenigstens einer Richtung senkrecht (Z₂Z₂') zu und oberhalb der Brücke, in der Nähe (1b) des Drehtellers erstreckt,
- wobei eine Vorrichtung zum Führen und Halten einer flexiblen Leitung (5) geeignet ist, das Verlegen einer ersten flexiblen Leitung (7-1) um und an dem mittleren Schaft (3) im sogenannten Karussell-Modus zu ermöglichen, umfassend:
(i) eine Vorrichtung zum Ziehen (5) der Leitung, welche geeignet ist, den ersten Abschnitt (7a) einer ersten Leitung (7-1) zu spannen, wobei die Zugvorrichtung (5) ein Kettenspanner ist, und
(ii) Mittel (2a), die geeignet sind, den ersten Abschnitt (7a) einer ersten flexiblen Leitung (7-1) vertikal zu bewegen, damit der erste Abschnitt (7a) einer ersten Leitung durch die Zugvorrichtung (5) im Wesentlichen horizontal gespannt werden kann, um das Verlegen der ersten Leitung im Karussell-Modus mit mehreren koaxialen Lagen (7₁, 7₂, 7₃) aus nebeneinanderliegenden, übereinander angeordneten Windungen zu ermöglichen, und
- wobei eine Vorrichtung zum Führen und Halten einer flexiblen Leitung (5) ferner geeignet ist, das Verlegen der zweiten bis (n+2)ten flexiblen Leitungen (7-2, 7-3) um und an den ersten bis jeweils (n+1)ten Zwischenpfosten im sogenannten drehkorbartigen Modus zu ermöglichen, umfassend:
(i) eine Vorrichtung zum Ziehen (5) der Leitung, die von einem Kettenspanner gebildet ist,
(ii) gelegen in einer Höhe, die größer ist als diejenige des oberen Flansches und der Zwischenpfosten und umfangsseitigen Haltepfosten, und
(iii) Mittel (2a), die geeignet sind, den ersten Abschnitt (7a) einer zweiten bis jeweils (n+2)ten flexiblen Leitung (7-2, 7-3), der sich in geneigter Position zwischen der Halte-und Führungsvorrichtung und der zweiten bis jeweils (n+2)ten aufgewickelten Leitung erstreckt, horizontal verschieblich in einer Querrichtung senkrecht (YY') zu der mittleren Drehachse (Z₁Z₁') zu bewegen, um das Verlegen der Leitung im sogenannten drehkorbartigen Modus in mehreren übereinander angeordneten Lagen (7₁, 7₂, 7₃) aus nebeneinander angeordneten konzentrischen, aneinanderstoßenden Windungen, die auf einer gleichen Ebene aufliegen, zu ermöglichen.

4. Vorrichtung nach Anspruch 3, **dadurch gekennzeichnet, dass** sie ein und dieselbe Vorrichtung zum Ziehen (5) einer Leitung umfasst, die geeignet ist, vertikal oder horizontal in konstanter Höhe relativ beweglich gegenüber einem Element zum Tragen (6) der Vorrichtung zum Führen und Halten einer flexiblen Leitung (5) bewegt zu werden, wobei das Tragelement vorzugsweise einen Portalrahmen (6) umfasst.

5. Vorrichtung nach einem der Ansprüche 1 bis 4, **dadurch gekennzeichnet, dass** wenigstens zwei flexible Leitungen auf die Lager- und Handhabungsvorrichtung aufgewickelt sind, umfassend:
- wenigstens eine erste Leitung (7-1) mit kleinerem Durchmesser, welche auf einen mittleren Schaft im Karussell-Modus aufgewickelt ist, und
- wenigstens eine zweite bis (n+2)te flexible Leitung (7-2, 7-3) mit größerem Durchmesser als die erste Leitung, welche im Drehkorb-Modus aufgewickelt ist.

6. Vorrichtung nach einem der Ansprüche 1 bis 5, **dadurch gekennzeichnet, dass** der Drehteller (3a) von zwei konzentrischen Teilen gebildet ist, umfassend:
- einen ersten inneren Drehteller in Scheibenform (3a-a), der geeignet ist, drehangetrieben zu werden, und
- einen zweiten ringförmigen äußeren Drehteller (3a-b), der zu dem ersten Drehteller konzentrisch und um den ersten Drehteller herum angeordnet ist, wobei der zweite Drehteller geeignet ist, festgelegt gehalten oder gleichzeitig mit dem ersten Drehteller drehangetrieben zu werden, wenn der erste Drehteller drehangetrieben wird.

7. Schiff zum Verlegen (1) von flexiblen Unterwasserleitungen im Meer, das mit einer Vorrichtung nach einem der Ansprüche 1 bis 6 ausgestattet ist, **dadurch gekennzeichnet, dass** das Schiff eine Brücke (1a) umfasst, die einen Hohlraum (1b) aufweist, in welchem der Drehteller (3a) und eine Vorrichtung zum Tragen und zum motorisierten Drehen (3a') des kreisförmigen Drehtellers (3a) angeordnet sind, wobei die Oberseite des kreisförmigen Drehtellers (3a) die Ebene des Teils der Brücke (1a), der direkt seitlich neben ihr gelegen ist, im Wesentlichen nicht überragt, wobei der Umfang des Drehtellers im Wesentlichen in Höhe der Brücke gelangt, wobei der Drehteller durch Elemente (3a'-1, 3a'-2, 3a'-4, 3a'-5) der Trag- und Drehvorrichtung (3a') innerhalb des Hohlraums (1b), die an der Tragstruktur (1c, 1l) des Rumpfes des Schiffes befestigt sind, getragen ist und mit diesen drehend zusammenwirkt, um dauerhaft hierin gelassen zu werden.

8. Verlegeschiff nach Anspruch 7, **dadurch gekennzeichnet, dass** die Tragstruktur des Rumpfes im Bereich des Hohlraums zusätzliche Verstärkungselemente umfasst und die Trag- und Drehvorrichtung (3a') innerhalb des Hohlraums wenigstens umfasst:
- einen Boden (3a'-4), der an zusätzlichen Verstärkungselementen (1e, 1h, 1k) der Tragstruktur des Rumpfes an der Unterseite des Bodens befestigt und durch diese getragen ist, und
- Drehführungselemente (3a'-3), die durch den Boden getragen sind, und eine Drehwelle (3a'-5), die durch zusätzliche Verstärkungselemente (1h) der Tragstruktur des Rumpfes an der Unterseite des Bodens getragen ist, und
- einen Motor (3a'-1) und Elemente zum Drehantreiben (3a'-2) des Tellers und der Drehwelle durch Betätigung des Motors, die durch die Tragstruktur des Rumpfes im Bereich und am Umfang des Hohlraums getragen sind.

9. Verlegeschiff (1) nach Anspruch 7 oder 8, **dadurch gekennzeichnet, dass** die Einhakelemente Nuten (4a) und/oder vorzugsweise gewindete Löcher (4b) umfassen, die auf der Oberfläche des Drehtellers radial und/oder kreisförmig angeordnet sind.

10. Schiff nach einem der Ansprüche 7 bis 9, **dadurch gekennzeichnet, dass** die Oberseite des Drehtellers (3a) eben ist und im Wesentlichen in Höhe der Ebene der Brücke um den Drehteller herum gelangt.

11. Verlegeschiff nach einem der Ansprüche 7 bis 10, **dadurch gekennzeichnet, dass** die Oberseite des Drehtellers kegelförmig ausgebildet ist, in der Mittellängsachse (XX') des Schiffes zentriert ist, einen halben Öffnungswinkel (α) von mehr als 95 Grad aufweisend, mit einem halben Öffnungswinkel (α), dessen Wert im Wesentlichen mit dem Neigungswinkel gegenüber der Vertikalen der beiden ebenen Teile (P₁, P₂) der Brücke des Schiffes identisch ist, bzw. gegenüber der Horizontalen in Richtung Steuerbord (P₂) und Backbord (P₁), ausgehend von einer mittleren Kante, welche entlang der mittleren axialen Längsrichtung (XX') des Schiffes angeordnet ist, leicht geneigt (β).

12. Schiff zum Verlegen einer Leitung im Meer (1) nach einem der Ansprüche 7 bis 11, **dadurch gekennzeichnet, dass** das Schiff ferner einen J-Lay-Turm (12) und wenigstens eine flexible Leitung (7, 7-1 bis 7-3) umfasst, die um eine Lager- und Handhabungsvorrichtung (20) gewickelt ist, welche eine Vorrichtung zum Halten und Führen eines ersten Leitungsabschnitts (7a), der sich zwischen der Halte- und Führungsvorrichtung und der aufgewickelten Leitung erstreckt, umfasst, wobei die Leitung einen zweiten gekrümmten, kettenlinienförmigen Leitungsabschnitt (7b) umfasst, welcher der Spannung nur seines Eigengewichts ausgesetzt ist, der sich zwischen der Halte- und Führungsvorrichtung (5) und einer Rolle (8), die in einer größeren Höhe an dem Turm (12) angeordnet ist, erstreckt, und wobei ein dritter Leitungsabschnitt (7c), der sich in dem Turm geradlinig erstreckt, mit Hilfe einer zweiten Zugvorrichtung (12b), die mit dem J-Lay-Turm (12) fest verbunden ist, gespannt wird.

13. Schiff nach einem der Ansprüche 7 bis 12, **dadurch gekennzeichnet, dass** die flexible Leitung eine flexible Unterwasserleitung (1) ist.

14. Verfahren zum Verlegen einer flexiblen Leitung (7, 7') im Meer von einem Schiff (1) nach Anspruch 12 oder 13 aus, **dadurch gekennzeichnet, dass** die folgenden Schritte durchgeführt werden:
1) Bewegen des Schiffes synchron mit dem Ablaufen der Leitung im Bereich der zweiten Zugvorrichtung innerhalb des J-Lay-Turms (12) und
2) Abwickeln der Leitung durch synchrones Betätigen der Rotation des Drehtellers und der Bewegung des ersten Leitungsabschnitts (7a), der sich zwischen der Halte-und Führungsvorrichtung (5) und der aufgewickelten Leitung erstreckt, um die Krümmung des zweiten Leitungsabschnitts (7b), der sich zwischen der Halte- und Führungsvorrichtung (5) und der Rolle (8), welche in einer größeren Höhe an dem Turm (12) angeordnet ist, erstreckt, mit einer kettenlinienförmigen Krümmung aufrechtzuerhalten, deren Krümmung an allen Stellen größer als die annehmbare Mindestkrümmung der flexiblen Leitung und derart ist, dass der kettenlinienförmige Leitungsabschnitt die Brücke (1a) des Schiffes nicht berührt.

15. Verfahren nach Anspruch 14, **dadurch gekennzeichnet, dass** die folgenden aufeinanderfolgenden Schritte durchgeführt werden, bei denen:
1) eine zweite oder (n+2)te flexible Leitung (7-2, 7-3), die im Drehkorb-Modus aufgewickelt ist, ohne auf den ersten geneigten Leitungsabschnitt (7a), der sich zwischen der Leitungshalte- und -führungsvorrichtung und der aufgewickelten Leitung erstreckt, Spannung auszuüben, unter Synchronisieren der Ablaufgeschwindigkeit der Leitung mit Hilfe einer Zugvorrichtung, vorzugsweise vom Typ Kettenspanner im Bereich der Leitungshalte- und -führungsvorrichtung und der Drehgeschwindigkeit des Drehtellers abgewickelt wird, und,
2) wenn jede (alle) zweite(n) bis (n+2)te(n) flexible(n) Leitung(en) abgewickelt und im Meer verlegt sind, die umfangseitigen Haltepfosten (9a) und Zwischenpfosten (9b, 9c) herausgenommen werden, und
3) das Abwickeln und das Verlegen einer im Karussell-Modus aufgewickelten ersten Leitung (7-1) im Meer unter Ausüben einer im Wesentlichen konstanten Spannung auf den ersten horizontalen Leitungsabschnitt (7a), welcher sich in im Wesentlich horizontal gehaltener Position zwischen der Leitungshalte- und - führungsvorrichtung und der auf einen mittleren Schaft aufgewickelten Leitung erstreckt, vollzogen werden.

## Claims

1. A modular storage and handling device (20) for storing first to (n+2)^{th} flexible lines, where n is an integer in the range 0 to 10, by winding and unwinding said flexible lines (7-1, 7-2, 7-3), the device comprising:
a) a said circular turntable (3a) and a motor-driven device (3a-1) for rotating the turntable (3a) about its vertical central axis (Z₁Z₁'), said turntable being arranged on a plane (1a) and presenting on its top face attachment elements (4, 4a-4b) having winding supports (3c, 9a, 9c) reversibly attached thereto, said attachment elements (4, 4a-4b) being arranged circularly and at different radial distances relative to the vertical central axis (Z₁Z₁') for rotating said turntable;
b) said winding supports extending in a direction (ZZ') perpendicular to said plane and above said turntable, and comprising:
b.1) a first winding support (3c) for at least a first flexible line (7-1), said first winding support having a continuous wall in the form of a tapering or right central cylinder (3c) arranged coaxially about the axis (Z₁Z₁') of said turntable (3a), of diameter smaller than the diameter of the turntable, said central cylinder being surmounted by at least one top circular plate (3b), said plate(s) presenting a diameter greater than the diameter of said central cylinder and less than the diameter of said turntable;
b.2) a series of a plurality of first intermediate posts referred to as "internal" posts (9c) forming second winding supports for a second flexible line (7-2), said first intermediate posts (9c) being arranged circularly relative to the central axis of rotation (Z₁Z₁') of said turntable and at the same constant radial distance from said axis (Z₁Z₁') greater than the radial distance of said first winding support, said first intermediate posts (9c) preferably having the same height and being secured to one another at their tops by being fastened to the periphery of said top plate (3b);
b.3) where n is different from 0, second to (n+1)^{th} intermediate posts forming winding supports for third to (n+2)^{th} flexible line(s) (7-3) respectively and forming retaining posts for second to (n+2)^{th} flexible line(s) (7-2) respectively, said second to (n+1)^{th} intermediate posts (9b) respectively being arranged circularly and relative to the central axis of rotation (Z₁Z₁') of said turntable at the same constant radial distance from said axis (Z₁Z₁') greater than the radial distance of said first to n^{th} intermediate posts (9c, 9b) respectively, the various posts in a given series of second to (n+1)^{th} intermediate posts preferably having the same height and being successively connected to one another at their tops by respective circular rails (3d); and
b.4) peripheral retaining posts (9a) arranged circularly and relative to the central axis of rotation (Z₁Z₁') of said turntable at the same constant radial distance from said axis (Z₁Z₁') greater than that of the (n+1)^{th} intermediate posts (9c, 9b), the various peripheral retaining posts (9a) preferably having the same height and being successively connected to one another at their tops by respective circular rails (3d);
c) first to (n+2)^{th} flexible lines comprising:
c.1) at least a said first flexible line (7-1) being wound in "carousel" mode in coaxial layer(s) (7₁, 7₂, 7₃) around said first winding support, each layer having a plurality of touching turns superposed helically at a common radial distance from said axis ZZ', such that the turns (7ᵢ-1 to 7ᵢ-ℓ, with i=1 to k) in the same layer (7₁, 7₂, 7₃) are superposed by being wound helically from the bottom turn (7₁-1, 7₂-1, 7₃-1) pressed against said turntable or an intermediate plate (3b') up to a top turn coming into abutment under said top plate or an intermediate plate (3b'), the various coaxial layers (7₁, 7₂, 7₃) being juxtaposed and of diameters that increase from the first layer (7₁) pressed against said central cylinder to the last layer (7₃) radially furthest from said central axis (Z₁Z₁');
c.2) said second to (n+2)^{th} flexible line(s) respectively being wound in "rotary basket" type mode as at least one layer (7₁, 7₂, 7₃) of touching turns lying on a common plane, each layer comprising at least one turn, said layers being superposed from the first layer (7₁) resting on said turntable up to the last layer (7₃, 7ₘ) under the tops of the winding supports of said line, the turns (7ᵢ-1 to 7ᵢ-p and i=1 to m) of a given layer being coaxial and successively juxtaposed on a common plane, and being of diameters that increase from an "internal" turn (7₁-1, 7₂-1, 7₃-1) pressed against said intermediate posts (9c, 9b) to an "external" turn (7ᵢ-p with i=1 to m) coming into abutment against said retaining posts for second to (n+1)^{th} flexible lines; and
c.3) a (n+2)^{th} flexible line coming into abutment against said peripheral retaining posts (9a).

2. A device according to claim 1, **characterized in that** n is an integer in the range 1 to 5.

3. A modular storage and handling device (20) for flexible lines according to claim 1 or claim 2, the device being **characterized in that** it further comprises:
• a spooler device (2) comprising at least one support element (6) for supporting at least one flexible line guide and holder device (5) suitable for enabling a said first portion (7a) of flexible line (7) that extends between the guide and holder device (5) and the last turn of the last layer of said already-wound or still-wound line to be moved vertically and horizontally in order to spool said flexible line (7, 7₁ to 7₃) around and against said winding supports (3c, 9b, 9c), said support element (6) preferably forming a tower or a gantry (6) extending at least in a direction (Z₂Z₂') that is perpendicular to and above said deck in the proximity (1b) of said turntable;
• a said flexible line guide and holder device (5) being suitable for enabling a first flexible line (7-1) to be spooled around and against said central cylinder (3) in "carousel" mode comprising:
i) a traction device (5) for the line and suitable for tensioning said first portion (7a) of the first line (7-1), said traction device (5) being a caterpuller; and
ii) means (2a) suitable for moving said first portion (7a) of the first flexible line (7-1) vertically, so that said first portion (7a) of the first line can be tensioned substantially horizontally by said traction device (5) in order to enable the first line to be spooled in carousel mode with a plurality of coaxial layers (7₁, 7₂, 7₃) of superposed touching turns; and
• a said flexible line guide and holder device (5) also being suitable for enabling second to (n+2)^{th} flexible lines (7-2, 7-3) to be spooled around and against said first to (n+1)^{th} intermediate posts respectively in "rotary basket" type mode, and comprising:
i) a traction device (5) for the line, constituted by a caterpuller;
ii) situated at a height higher than said top plate and said intermediate posts and peripheral retaining posts; and
iii) means (2a) suitable for moving in horizontal translation in a transverse direction (YY') perpendicular to said central axis of rotation (Z₁Z₁'), said first portion (7a) of the second to (n+2)^{th} flexible line (7-2, 7-3) respectively extending in an inclined position between the holder and guide device and the second to (n+2)^{th} wound line respectively, so as to enable said line to be spooled in "rotary basket" type mode as a plurality of superposed layers (7₁, 7₂, 7₃) of juxtaposed concentric touching turns resting on the same plane.

4. A device according to 3, **characterized in that** it has a single common line traction device (5) suitable for being moved vertically or horizontally at constant height to move relative to a said support element (6) of said flexible line guide and holder device (5), said second support element preferably comprising a gantry (6).

5. A device according to any one of claims 1 to 4, **characterized in that** at least two flexible lines are wound on the storage and holder device, comprising:
• at least one said first line (7-1) of smaller diameter wound on a said central cylinder in carousel mode; and
• at least one second to (n+2)^{th} flexible line (7-2, 7-3) of larger diameter than said first line wound in rotary basket mode.

6. A device according to any one of claims 1 to 5, **characterized in that** said turntable (3a) is made up of two concentric portions comprising:
• an inner first turntable in the form of a disk (3a-a) suitable for being driven in rotation; and
• an outer second turntable of annular shape (3a-b) that is concentric with said first turntable and arranged around said first turntable, said second turntable being suitable for being held stationary or for being driven in rotation together with said first turntable when said first turntable is driven in rotation.

7. A laying ship (1) for laying flexible undersea lines and fitted with a device according to any one of claims 1 to 6, said ship being **characterized in that** it comprises a deck (1a) including a cavity (1b) having arranged therein said turntable (3a) and a motor-driven support and rotation device (3a') for the circular turntable (3a), the top face of said circular turntable (3a) not projecting significantly beyond the level of the portion of the deck (1a) that is immediately juxtaposed laterally thereto, the periphery of said turntable coming level with said deck, said turntable being supported by and cooperating in rotation with elements (3a'-1, 3a'-2, 3a'-4, 3a'-5) of the support and rotation device (3a') within said cavity (1b) and being fastened to the carrier structure (1c, 1ℓ) of the hull of the ship, in order to be left there permanently.

8. A laying ship according to claim 7, **characterized in that** said carrier structure of the hull includes additional reinforcing elements in said cavity, and said support and rotation device (3a') within said cavity comprises at least:
• a floor (3a'-4) fastened to and supported by said additional reinforcing elements (1e, 1h, 1k) of said carrier structure of the hull under said floor;
• rotary guide elements (3a'-3) supported by said floor and a rotary shaft (3a'-5) supported by additional reinforcing elements (1h) of said carrier structure of the hull under said floor; and
• a motor (3a'-1) and rotary drive elements (3a'-2) for driving the turntable and said rotary shaft in rotation by actuating said motor, the elements being supported by said carrier structure of the hull at the periphery of said cavity.

9. A laying ship (1) according to claim 7 or claim 8, **characterized in that** said attachment elements comprise grooves (4a) and/or preferably threaded holes (4b) arranged radially and/or circularly, over the surface of the turntable.

10. A ship according to any one of claims 7 to 9, **characterized in that** the top face of said turntable (3a) is plane and substantially at the same level as the plane of said deck around said turntable.

11. A laying ship according to any one of claims 7 to 10, **characterized in that** the top face of said turntable is conical in shape, centered on the middle longitudinal axis (XX') of the ship, presenting a half-angle at the apex (α) greater than 95 grad, a half-angle at the apex (α) of value substantially identical to the angle of inclination relative to the vertical of said two plane portions (P₁, P₂) of the deck of the ship, respectively sloping at a small angle (β) relative to the horizontal to starboard (P₂) and to port (P₁) from a central ridge arranged along said middle axial longitudinal direction (XX') of the ship.

12. A laying ship (1) for laying line at sea according to any one of claims 7 to 11, **characterized in that** it further includes a J-lay tower (12) and at least one said flexible line (7, 7-1 to 7-3) wound around a said storage and handling device (20) including a holder and guide device for holding and guiding a said first line portion (7a) extending between said holder and guide device and the wound line, said line including a curved second line portion (7b) of catenary shape that is subjected to the tension solely of its own weight extending between said holder and guide device (5) and a sheave (8) arranged at a greater height on the tower (12), and a third line portion (7c) extending in rectilinear manner within the tower being tensioned with the help of a second traction device (12b) secured to said J-lay tower (12).

13. A ship according to any one of claims 7 to 12, **characterized in that** said flexible line is an undersea flexible pipe (1).

14. A method of laying a flexible line (7, 7') at sea from a ship (1) according to claim 12 or claim 13, **characterized in that** the following steps are performed:
1) moving the ship in a manner that is synchronized with the running of the line through said second traction device within the J-lay tower (12); and
2) unwinding said line by actuating in synchronized manner rotation of said turntable, and moving said first line portion (7a) that extends between said holder and guide device (5) and the wound line in such a manner as to maintain the curvature of said second line portion (7b) extending between said holder and guide device (5) and said sheave (8) arranged at a greater height on the tower (12), with a catenary curve of curvature that is at all points greater than the minimum curvature that is acceptable for the flexible line, and in such a manner that said catenary line portion does not touch the deck (1a) of the ship.

15. A method according to claim 14, **characterized in that** the following successive steps are performed:
1) a said second or (n+2)^{th} flexible line (7-2, 7-3) wound in rotary basket is unwound without exerting tension on said sloping first portion (7a) of line extending between the line holder and guide device and the wound line, by synchronizing the travel speed of the line with the help of a traction device, preferably of the caterpuller type at said line holder and guide device, with the speed of rotation of said turntable;
2) when all of said second to (n+2)^{th} flexible lines have been unwound and laid at sea, removing said peripheral retaining posts (9a) and said intermediate posts (9b, 9c); and
3) unwinding and laying at sea a said first line (7-1) wound in carousel mode by exerting substantially constant tension on said first horizontal line portion (7a) extending in a position that is maintained substantially horizontal between the line holder and guide device and the line wound on said central cylinder.
